(19) Europäisches Patentamt

European Patent Office

Office européen des brevets

(11) **EP 0 795 806 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.$^7$: **G05D 1/08**

(21) Anmeldenummer: **96112975.6**

(22) Anmeldetag: **12.08.1996**

(54) **Vorrichtung zur Lageregelung und Stabilisierung eines Raumfahrzeuges**

Apparatus and method for attitude control and stabilisation of a spacecraft

Appareil et procédé de controle d'attitude et de stabilisation d'engins spaciaux

(84) Benannte Vertragsstaaten:
**DE FR GB IT**

(30) Priorität: **11.08.1995 DE 19529675**

(43) Veröffentlichungstag der Anmeldung:
**17.09.1997 Patentblatt 1997/38**

(60) Teilanmeldung:
**00125878.9 / 1 093 041**

(73) Patentinhaber: **Astrium GmbH**
**81663 München (DE)**

(72) Erfinder:
• **Surauer, Michael, Dipl.-Ing.**
**83339 Chieming (DE)**

• **Keeve, Rolf, Dipl.-Ing.**
**85521 Ottobrunn (DE)**
• **Ertongur, Nahit, Dipl.-Ing.**
**85521 Ottobrunn (DE)**

(74) Vertreter: **Hummel, Adam et al**
**EADS Deutschland GmbH,**
**Intellectual Property Management FTP/M,**
**Postfach 80 11 09**
**81663 München (DE)**

(56) Entgegenhaltungen:
**US-A- 3 813 067          US-A- 4 521 855**
**US-A- 5 149 022          US-A- 5 308 024**
**US-A- 5 343 398**

EP 0 795 806 B1

**Beschreibung**

1. Stand der Technik

Die gegenwärtigen "Normal-Mode" Regelungen für 3-achsig stabilisierte Raumfahrzeuge basieren auf zwei grundlegenden Regelungskonzepten mit prinzipiell unterschiedlichen Vor- und Nachteilen.

1.1 Regelungssysteme ohne Drallsteifigkeit

Merkmale:

· Der resultierende Drallvektor ist nominell verschwindend klein = "0"
· Kontinuierliche dreiachsige Lagemessung (Roll, Pitch, Yaw) Typische Lagemessysteme:

- Erdsensor (2-achs ig)
- Sonnensensor (1-achsig) und/order Sternsensor (2-achs ig)
- Integrierte Kreisel (1- bis 3-achs ig) ODER
- Sternsensor (3-achs ig)
- Integrierte Kreisel (3-achs ig)

· Stellglieder zur Erzeugung linear unabhängiger Kontrollmomente um alle 3 Satellitenachsen Typische Aktuatorsysteme:

- 4-Reaktionsräder (3-achs ige Momente, 0.1 Nm, Redundanz)
- Triebwerke (3-achs ige Momente) zur Drallentladung ODER
- Magneto Torquer (2- oder 3-achs ige Momente 1 - 3 µNm) zur Drallentladung ODER
- Solargenerator (2-achs ige Momente 1 - 3 µNm) zur Drallentladung

VORTEILE:

- Die Pointing Genauigkeit ist auf Grund der kontinuierlichen 3-achsigen Lagemessung und der Generierung von unabhängigen Regelmomenten um Roll, Pitch und Yaw bestimmt durch die Meßfehler und die Reglerauslegung und nicht durch die äußeren Störmomente
- Übergangsphasen (z.B. nach Triebwerksregelung zur Ürbitpositionshaltung) mit hohen Anfangsablagen o/u Anfangsgeskeiten sind gut beherrschbar weil die Regeikreisverstärkung und Bandbreite wegen des Stellmomentenbereichs Reaktionsräder (0.1 Nm) den Anforderungen entsprechend gewählt werden können.
- "Inklined" Operation ist ohne zusätzlichen Treibstoffverbrauch möglich

NACHTEILE:

- Hohe Kosten der Sensorik für die kontinuierliche 3-achsige Lagemessung
- "Thermal distortion" zwischen dem Referenzsensor und den an verschiedenen Orten im Satelliten angebrachten optischen Lagesensorköpfen verschlechtert die Yawgenauigkeit erheblich
- Im Fehlerfall (Defekt im Regelkreis) gibt es keine passiv stabile Lage des Satelliten was eine erheblich Einbuße an Zuverlässigkeit bei langen operationellen Betriebszeiten (2-15 Jahre) darstellt

1.2 Regelsysteme mit Drallsteifigkeit

Merkmale:

- Der resultierende Drall ist deutlich von "0" verschieden und hat nominell nur eine y-Komponente im Satelliten (5-100 Nms)

- WHECON-Prinzip

  - Zweiachsige (Roll, Pitch) Lagemessung wobei normalerweise "Erdsensoren" verwendet werden
  - Stellglieder zur Erzeugung von Kontrollmomenten zur Stabilisierung von Nutation und Orbitkopplung

Typische Aktuatorsysteme:

- Aktuatoren zur Stabilisierung der Nutation und Pitchachse

  -- 1 Bias Momentum Drallrad in y-Richtung und linear Kontrol Imomentgenerierung um Pitch und ein Triebwerkspaar mit "Roll/Yaw-Komponente" MATRA/DASA-Konzept
  -- 2 Bias Momentum Drallräder in V-Konfiguration
  und
  1 Bias Momentum Drallrad und 1 Reaktionsrad in L-Konfiguration
  SS/LORAL-Konzept
  oder
  1 Bias Momentum Drallrad und ein 1-achsiger Gimball Mechanismus
  GE-ASTRO-Konzept
  wobei der resultierende Drallvektor nominell in y-Richtung zeigt und linear Kontrollmomente um Pitch und Roll
  erzeugt werden

- Aktuatoren zur Stabilisierung der Orbitkopplung

  -- Ein Triebwerkspaar mit "Roll/Yaw-Komponente" DASA-Konzept
  -- Magneto-Torquer mit "Yaw-Komponente" GE-ASTRO-Konzept
  -- Solartorque-Kompensationstechniken mit "Yaw-Komponente" MATRA-Konzept (Solarflaps)

VORTEILE des WHECON-Prinzips:

- Robustes und einfaches Regelsystem mit Erdsensor als Lagereferenz
- Im Fehlerfall (Ausfall der Regelung) hat der Satellit eine stabile Lage wegen des gespeicherten Dralls mit der y-Achse (Drallsteifigkeit). so daß man mit einfachen und bewährten Strategien die Reakquisition durchführen kann.

NACHTEILE des WHECON-Prinzips:

- Die Drallsteifigkeit bringt auch eine unerwünschte Verkopplung (Nutation) zwischen Roll and Yaw
- Übergangsphasen mit hohen Anfangslagen oder/und hohen Anfangsgeschwindigkeiten sind schlecht beherrschbar (Nutation) und Insbesondere in Yaw können diese nur sehr langsam abgebaut werden (keine Yawmessung und sehr kleines Yawkontrollmoment 10-50 $\mu$Nm)
- Der Yawfehler ist in erster Linie von den "Äußeren Störmomenten und dem Drall in der Pitchachse abhängig und durch die Reglereinstellung wenig beeinflußbar
- "inklined operation" ist mit DASA und MATRA Konzept nicht möglich
- bei hohem Normalbetriebsstörmomenten (> 15 $\mu$Nm) und langen Sat-Betriebszeiten (> 12 Jahre) verbraucht die Triebwerksregelung mehr als 25 kg Treibstoff (DASA-Konzept)

1.2.2 NAMC-Prinzip

Verbesserte DASA-Normalmoderegelung

- 3-achsige Lagemessung mit Erdsensor und Sonnensensor
- Yawschätzer im Bereich der Kolinearität von Sonne und Erde
- Bias Momentum Drallrad in der y-Richtung und lineare Generierung des Pitch-Regelmoments
- Erzeugung von unabhängigen Kontrollmomentimpulsen mit separaten Triebwerkspaaren für Roll- und Yaw-Achse
- Anwendung von Solartorque Kompensationstechniken zur Reduzierung des Treibstoffbedarfs

VORTEILE des NAMC-Prinzips:

- Die Verwendung

  -- der optischen Sonnen- und Erdsensoren und eines Yawschätzers in den Kolinearitätsbereichen zur 3-achsigen Lagebestimmung
  -- des Drallrades und separater Roll- und Yaw-Triebwerkspaare zur Generierung von unabhängigen Regelmomenten in Roll, Pitch und Yaw verbessert das Verhalten während der Übergangsphasen erheblich, ferner wird die Yawgenauigkeit nicht mehr durch die äußeren Störmomente und den Pitchdrall sondern durch Lagebestimmungsfehler und die Reglerauslegung bestimmt.

- Im Fehlerfall gelten dieselben Vorzüge wie für das WHECON-Prinzip

NACHTEILE des NAMC-Prinzips:

- Bezüglich der "Thermal Distortion" zwischen Erd- und Sonnensensorköpfen gilt der gleiche negative EInfluß auf die Yawgenauigkeit wir für REGELSYSTEME OHNE DRALLSTEIFIGKEIT
- "Inklined operation" benötigt 20 kg Treibstoff (gilt für 10 N - Triebwerke, Verbesserung durch neue 4 N - Triebwerke um Faktor 2)
- Die Rollgenauigkeit ist auf Grund der minimalen Triebwerksimpulse zwar um einen Faktor 2 besser als beim DASA WHECON-Konzept aber dennoch limitiert.

2. <u>Merkmale und Vorteile der Erfindung</u>

Die Erfindung löst die bisherigen Problembereiche der bisher angewandten Regelsysteme (siehe Stand der Technik) und erweitert den Einsatzbereich um die Lageregelung während der Positionshaltungsmanöver mit "ELEKTRISCHEN TRIEBWERKEN" über mehrere Stunden Manöverzeit mit Normalbetriebsgenauigkeiten und minimalem Treibstoffverlust. Die wichtigsten Merkmale und signifikantesten Vorteile der Erfindung weden im folgenden kurz beschrieben.

2.1 Aktuator Konfiguration zum Erzeugen unabhängiger Kontrollmomente um alle 3 Satellitenachsen und der Drallsteifigkeit in der Pitchachse

- Spezielle 4-Wheel Anordung (siehe technische Beschreibung) oder
  2 Bias-Momentum Drallräder jeweils zweiachsig schwenkbar
  mit resultierendem Drall in der Pitchachse und der Möglichkeit unabhängige Regelmomente um alle Satellitenachsen zu generieren
- Drallräderentladung in ausgewählten Orbit-Positionen mit Triebwerken oder

kontinuierliche oder quasi-kontinuierliche Regelung der Drallrädergeschwindigkeiten (des Drallvektors) durch generieren äußerer Regelmomente mittels

- -- Triebwerkspulse
  oder
- -- Magnetotorquer
  oder
- -- Solartorque-Techniken

2.2 Sensor Konfiguration - Roll, Pitch und Yaw Attitude Bestimmung

- - 2-achsige Roll und Pitch Attitude Sensoren

  - -- Zweiachsige Roll und Pitch Messung mit Erdsensor
  - -- Kontinuierliche neuartige YAWSCHÄTZUNG (siehe technische Beschreibung)
  - -- Neuartige STÖRMOMENTENKOMPENSATION (siehe technische Beschreibung)

- - 3-achsige Attitude Sensorik

  - -- Zweiachsige Roll und Pitch Messung mit Erdsensor
  - -- Kontinuierliche mind. dritte Lagereferenz durch Sternsensor oder präzise Kreiselsensonre oder
  - -- Dritte Lagereferenz mittels Sonnensensor mit Rundumsicht und Orbitmodell im Bordrechner
  - -- Neuartiger YAWSCHÄTZER für den Bereich der Kolinearität von Erde undSonne (siehe technische Beschreibung)

    - - Neuartiger STÖRMOMENTESCHÄTZER wird nur im Kolinearitätsbereich verwendet (siehe technische Beschreibung)

2.3 Verfahrensmerkmale (siehe technische Beschreibung)

- - Aktive NUTATIONSENTKOPPLUNG durch den Regelalgorithmus bringt auch die ENTKOPPLUNG von Roll und Yaw Dynamik bei Erhalt der DRALLSTEIFIGKEIT des Satelliten
- - Neuartiger YAWSCHÄTZER hat folgende Merkmale

  - -- Verwendung der Übertragungsfunktion des geschlossenen Rollregelkreises (reduziertes Modell)
  - -- Reduzierter Yaw-Observer 2. Ordnung
  - -- Das Yaw-Beobachtbarkeitmaß @ ist um ungefähr eine Zehnerpotenz

$$@ = (OMNUT/OMORB)^{1/2}$$

    OMNUT: Nutationsfrequenz
    OMORB: Orbifrequenz
  besser als bei den bisher angewandten Yawschätzern, so daß die Einschwingzeitdauer mit dem selben Faktor @ verkürzt wird.
  - -- genaue Kompensation durch Wheel Entladungs-Regelgesetz der konstanten Störmomente im inertialen System und genaue Schätzung und Kompensation der x-Komponente des konstanten Störmoments im Satelliten-Referenz-System mit äußeren Momentengebern wie S.G., Magneto-Torquern, chemischen und elektrischen Triebwerken. Die z-Achse des konstanten Störmoments im Satelliten-Referenz-System kann über einen Modellfaktor kompensiert werden. Basis für diese genauen Schätzungen sind die linearen Stellglieder (wheels) im Gegensatz zu den nichtlinearen Stellglieder S.G. (Thermalverformung), Triebwerke, Magneto-Torquer (Magnetfeldänderung)).

- - Kontinuierliche Drallregelung (Drallradgeschwindigkeit) oder Drallradentladung mit externen Momentengebern

-- Im Falle einer zur Verfügung stehenden Giermessung gibt es zwei Möglichkeiten die gleichwertig bezüglich der Lagegenauigkeit und der Treibstoffnutzung sind:

· Periodische Drallradentladung mit chemischen Triebwerken (während SKM oder während der Knotenlinien des Orbits) um den Treibstoff optimal zu nutzen
· Kontinuierliche Regelung durch Solar Torque Kompensation oder Magneto Torquer oder mit elektrischen Triebwerkssystemen.

-- Falls keine separate Giermessung zur Verfügung steht, gibt es zwei Möglichkeiten, die unterschiedlichen Lagegenauigkeiten im Gieren zur Folge haben:

· Kontinuierliche Regelung der Drallkomponenten der Räder mit dem entsprechenden Regelgesetz und Störmomentenkompensation (siehe technische Beschreibung) führt zu einer sehr hohen Gier-Lagegenauigkeit, wobei die externen Torque-Geber (Magneto Torquer, Solar Torquers) chemische und elektrische Triebwerke sein können.
· Die periodische Entladung (während SKM oder Orbitknoten) mit den selben externen Torquegebern führt zu einer Lagegenauigkeit, die ca. um einen Faktor 2 schlechter ist.

VORTEILE:

1. Aktive Nutationsentkopplung durch den Regelalgorithmus bei Erhaltung der Drallsteifigkeit des Satelliten und optimales Verhalten während der Übergangsphasen zu/nach Triebwerksbetriebsphasen Der Vorteil der Drallsteifigkeit im Fehlerfall (Ausfall der Regelung) eine stabile Lage des Satelliten sicherzustellen, wird durch die gewählte Wheel-Konfiguration beibehalten und zusätzilch wird durch die aktive Nutationsentkopplung des Regelalgorithmus auch die Roll- und Yaw-Achse entkoppelt, so daß die Übergänge nach Triebwerksbetriebsphasen gut beherrschbar werden, wobei die notwendige Regelkreisverstärkung und die Closed Loop Bandbreite wegen der oben beschriebenen Drall-/Reaktionsrad Anordnungen und der daraus resultierenden quasi linearen hohen Kontrollmomentbereiche (ung. - 1Nm) um alle drei Achsen wesentlich höher sind und somit die Robustheit der Regelungsperformance enorm verbessern. Die Übergänge zu den Triebwerksbetriebsphasen werden im folgenden beschrieben optimiert bezüglich Treibstoffverbrauch und Orbitstörung.
Die Übernahme der 3-Achsenreferenz wird zunächst mit den Drallrädern als Stellglieder durchgeführt und erst wenn der Regelkreis sich im stationären Zustand befindet, wird auf die Triebwerksregelung umgeschaltet.

2. Hohe Lagegenauigkeit in allen Achsen, insbesondere in Yaw mit Erdsensormessung alleine als Basis zur Lagebestimmung des Satelliten
Die Lagegenauigkeit in Roll und Pitch ist durch die Erdsensorfehler vorgegeben, weil die quasi linearen Stellglieder (Drall-/Reaktionsräder) unterstützt durch den Regelalgorithmus (anders als bei Triebwerksregelung) keinen wesentlichen Anteil zum Lagefehlerbudget beitragen.
Die Kalibierung der Thermaldistortion von Sonnen- und/oder Sternsensoren und die Art der Gierlage und Gierstörmomentenkompensation (siehe technische Beschreibung) bringt eine enorme Verbesserung der Lagegenauigkeit für die gesamte operationelle Phase des Satelliten. Im Fall, daß keine eigene Giermessung zur Verfügung steht, wird durch den speziellen Gierschätzer und die "externe Drallradregelung" mit Schätzung des Störmomentenverlaufs ebenfalls eine wesentlich bessere Giergenauigkeit im Normal Mode erreicht.

3. Minimierung von Orbitstörung und Treibstoffverbrauch während der operationellen Phase des Satelliten Die Regelung mit Drallrad-Momenten um alle drei Achsen (während Transitionsphase keine Triebwerkspulse) und die erhöhte Gier-Lagegenauigkeit für insbesondere bei Verwendung von elektrischen Triebwerken für Station Keeping Manöver führen. zu einem minimalen Treibstoffverbrauch in der operationellen Phase.

3.1 Hardware-Konfiguration

Eine beispielhafte Hardware-Konfiguration ist in Bild 1 dargestellt.

3.1.1 Sensoren

Der Normalbetriebs-Regler kann sowohl Erd- als auch Sonnensensoren verwenden.

3.1.1.1 Erdsensoren

Die optische Achse des Erdsensors verläuft parallel zur z-Achse des Raumfahrzeugs.

3.1.1.2 Anordnung der hochgenauen Sonnensensoren

Drei Sonnensensor-Köpfe sorgen für volle Rundumsicht um den Raumflugkörper. Das Gesichtsfeld der Sonnensensor-Anordnung ist in Bild 2 dargestellt. Es beträgt $0° \leq \alpha \leq 360°$; $-64° \leq \beta \leq 64°$

3.1.2 Aktuatoren

3.1.2.1 Verwendung von Düsen

Die Düsen werden im Normalbetrieb höchstens im Notfall zur Entdrallung verwendet.

3.1.2.2 Anordnung der Drall- und Reaktionsräder

3.1.2.2.1 Anordnung für kleine Drehungen des Raumfahrzeugs und bei hohem Drall um die Gierachse

Die Anordnung der Drall- und Reaktionsräder einer erfindungsgemäßen Ausführungsform wird im folgenden beschrieben.
Die Anordnung umfaßt zwei Drall- und zwei Reaktionsräder. Die Drallräder sind symmetrisch bezüglich der y/z-Ebene des Raumfahrzeugs um die Winkel $\pm v$ von der y-Achse geneigt. Die geneigten Drallradachsen und die y-Achse liegen gewöhnlich in einer Ebene und werden um die y-Achse um einen Winkel $\eta$ gedreht. Die Richtung des Drallvektors des Reaktionsrades ist parallel zur x-Achse bzw. zur z-Achse (Bild 3).
Typischerweise liegen die Werte fiir $\eta$ und $v$ im Bereich $0° < \eta < 90°$ bzw. im Bereich $0° < v < 90°$. Die Basiskonfiguration besteht aus einem Drallrad (FMW1 oder FMW2) und zwei Reaktionsrädern.
Für den Notfall werden zwei Fälle betrachtet:

a) Bei Ausfall von einem Drallrad werden das verbleibende Drallrad und die beiden Reaktionsräder zur Regelung verwendet.

b) Bei Ausfall von einem Reaktionsrad werden beide Drallräder und das verbleibende Drallrad zur Regelung verwendet.

3.1.2.3 Verwendung der Solarflügel-Ansteuerung (SADA) als Aktuator

Die Solarflügel-Ansteuerung (SADA) wird im nominalen Betriebszustand des Normalbetriebs als Aktuator verwendet, um die Auswirkungen der Störmomente im Roll/Gier-Regelungssystem zu kompensieren.

3.2 Drehbewegung des Raumflugkörpers

Die Eulergleichung für die auf den Schwerpunkt bezogene Drehbewegung eines starren Raumflugkörpers mit Drall- und Reaktionsrädern lautet:

$$\underline{h}_s(B) + \underline{\omega} \times \underline{h}_s = \underline{T}_C + \underline{T}_D + \underline{T}_G \tag{1}$$

wobei

$\underline{h}_s$   der Gesamtdrall des Raumflugkörpers einschließlich Drallrädern um seinen Schwerpunkt ist,

$\underline{\omega}$   die absolute Winkelgeschwindigkeit ist mit den Komponenten

$$\underline{\omega} = [\omega_x,\ \omega_y,\ \omega_z]^T \tag{2}$$

und $\underline{T}_C$, $\underline{T}_D$, $\underline{T}_G$ äußere Momente sind, welche den Einfluß der Regelung, der Störung und des Schwerkraftgradienten beschreiben.

Man beachte, daß

- alle unterstrichenen Buchstaben Vektoren im körperfesten Koordinatensystem darstellen, falls es nicht anders angegeben ist,

- und der Index "(B)" eine Differenziation bezogen auf das körperfeste Koordinatensystem darstellt, welches seinen Ursprung im Körperschwerpunkt hat.

Die äußeren Reglermomente stammen hauptsächlich aus zwei Quellen,

$$\underline{T}_C = \underline{T}_{CTH} + \underline{T}_{CSA} \tag{3}$$

wobei $\underline{T}_{CTH}$ das von den Düsen am Raumflugkörper aufgebrachte Reglermoment ist und $\underline{T}_{CSA}$ das vom Solardruck auf die Solarflächen übertragene Regelmoment ist.

Der Gesamtdrall des Raumflugkörpers in Gl. (1) setzt sich aus zwei Teilen zusammen,

$$\underline{h}_s = \underline{h}_w + \underline{h}_v \tag{4}$$

wobei $\underline{h}_w$ der in den Drallrädern gespeicherte Drall im körperfesten Koordinatensystem und $\underline{h}_v$ der Drall des Raumflugkörpers ohne den Drall der Drallräder ist.

Unter der Voraussetzung, daß das körperfeste Koordinatensystem mit den Hauptträgheitsachsen des Raumflugkörpers übereinstimmt, gilt für den Drall des Raumflugkörpers:

$$\underline{h}_V = \begin{bmatrix} I_x & 0 & 0 \\ 0 & I_y & 0 \\ 0 & 0 & I_z \end{bmatrix} \cdot \underline{\omega}, \tag{5}$$

wobei $I_x$, $I_y$, $I_z$ die Hauptträgheitsmomente des Raumflugkörpers (einschließlich der Drallräder) um die Hauptträgheitsachsen sind.

Die Komponenten des Drallräder-Dralls im körperfesten Koordinatensystem seien

$$\underline{h}_w = [h_x, h_y, h_z]^T. \tag{6}$$

Einsetzen der Gln.(4-6) in (1) ergibt die folgenden nichtlinearen Bewegungsgleichungen um die $x_s$ - Achse (Rollen), $y_s$-Achse (Nicken) und $z_s$-Achse (Gieren) des Raumflugkörpers:

$$\begin{bmatrix} I_x \cdot \dot{\omega}_x + \left(I_z - I_y\right) \cdot \omega_y \cdot \omega_z - h_y \cdot \omega_z + h_z \cdot \omega_y + \dot{h}_x \\ I_y \cdot \dot{\omega}_y + \left(I_x - I_z\right) \cdot \omega_x \cdot \omega_z + h_x \cdot \omega_z - h_z \cdot \omega_x + \dot{h}_y \\ I_z \cdot \dot{\omega}_z + \left(I_y - I_x\right) \cdot \omega_x \cdot \omega_y - h_x \cdot \omega_y + h_y \cdot \omega_x + \dot{h}_z \end{bmatrix} = \underline{T}_C + \underline{T}_D + \underline{T}_G$$

Linearisierung der kinematischen Gleichungen

Im folgenden wird angenommen, daß der Raumflugkörper im geostationären Orbit fliegt und die Achsen des Satelliten-Koordinatensystems ($x_s$, $y_s$, $z_s$) zu Beginn mit dem Orbitreferenz-Koordinatensystem zusammenfallen. Die +$z_s$-Achse zeigt zum Erdmittelpunkt, die +$y_s$-Achse steht senkrecht zur Äquatorebene nach Süden zeigend und die +$x_s$-Achse zeigt in Flugrichtung. Ferner habe der Raumflugkörper kleine Anfangsauslenkungen, die als Voreinstellungs-Euler-Winkel $\psi_b$, $\theta_b$, und $\phi_b$ um die $z_s$-Achse, die $y_s$-Achse, bzw. die $x_s$-Achse des Satelliten- bzw. körperfesten Systems bezeichnet werden.

Wenn der Raumflugkörper von seiner Ausgangslage ausgehend um die kleinen Euler-Winkel $\psi$, $\theta$, und $\phi$ noch weiter ausgelenkt wird, so ist die linearisierte Koordinatentransformationsmatrix vom Orbitreferenz-Koordinatensystem zum körperfesten Koordinatensystem

$$\underline{L}_{S/O} \approx \begin{bmatrix} 1 & \Delta\psi & -\Delta\theta \\ -\Delta\psi & 1 & \Delta\phi \\ \Delta\theta & -\Delta\phi & 1 \end{bmatrix}, \tag{8}$$

wobei folgende Schreibweisen eingeführt wurden,

$$\Delta\phi = \phi + \phi_b, \ \Delta\theta = \theta + \theta_b, \ \text{und} \ \Delta\psi = \psi + \psi_b. \tag{9}$$

Die in Gl. (9) angegebenen Winkel $\Delta\phi$, $\Delta\theta$ und $\Delta\psi$ werden als sehr klein angenommen, so daß die eigentlich nichtlineare Transformation zwischen dem Orbitreferenz-Koordinatensystem und dem körperfesten Koordinatensystem - die auftretenden Kosinus- und Sinus-Terme wurden durch eins bzw. ihr Argument ersetzt - gut durch die Matrix $\underline{L}_{S/O}$ in Gl. (8) approximiert werden kann.

Die kleinen Winkelgeschwindigkeiten um jede Achse des Raumflugkörpers sind für kleine Lagewinkel $\phi$, $\theta$, $\psi$ und für kleine Voreinstellungswinkelgeschwindigkeiten ungefähr so groß wie die Euler-Winkelgeschwindigkeiten des Raumflugkörpers bezogen auf das ausgelenkte Koordinatensystem, welches aus dem Orbitreferenz-System durch Auslenkung um die Euler-Anfangswinkel $\psi_b$, $\theta_b$, und $\phi_b$ entstanden ist, d.h.

$$\underline{\omega}_r^B \approx \begin{bmatrix} \phi & \theta & \psi \end{bmatrix}^T, \tag{10}$$

wobei der Index-B einen Vektor im körperfesten Koordinatensystem kennzeichnet.

Zusätzlich muß die Winkelgeschwindigkeit des Raumflugkörpers eine Komponente besitzen, welche der Orbitwinkelgeschwindigkeit $\omega_0$ entgegenwirkt, damit die $z_s$-Achse im ausgeregelten Zustand auf die Erde zeigt, d.h.

$$\underline{\omega}_o^0 = \begin{bmatrix} 0 & -\omega_0 & 0 \end{bmatrix}^T, \tag{11}$$

wobei der Index "O" einen Vektor im Orbitreferenz-Koordinatensystem kennzeichnet.

Nach der Transformation von $\underline{\omega}_o^O$ in Gl. (11) vom Orbitreferenzsystem in das körperfeste System mit Hilfe der Transformationsmatrix in Gl. (8) erhält man für die absolute Winkelgeschwindigkeit des Raumflugkörpers:

$$\omega_x \approx \dot{\phi} - \omega_0 \cdot \psi - \omega_0 \cdot \psi_b$$
$$\omega_y \approx \quad \dot{\theta} - \omega_0 \qquad\qquad\qquad\qquad\qquad\qquad (12)$$
$$\omega_z \approx \dot{\psi} + \omega_0 \cdot \phi + \omega_0 \cdot \phi_b$$

Für kleine Winkel und Winkelgeschwindigkeiten können folgende Approximationen durchgeführt werden:

$$\omega_x \cdot \omega_y \approx -\omega_0 \cdot \dot{\phi} + \omega_0^2 \cdot \psi + \omega_0^2 \cdot \psi_b$$
$$\omega_x \cdot \omega_z \approx 0 \qquad\qquad\qquad\qquad\qquad\qquad (13)$$
$$\omega_y \cdot \omega_z \approx -\omega_0 \cdot \dot{\psi} - \omega_0^2 \cdot \phi + \omega_0^2 \cdot \phi_b,$$

und bei konstanter oder sich langsam ändernder Orbitfrequenz $\omega_0$

$$\dot{\omega}_x \approx \ddot{\phi} - \omega_0 \cdot \dot{\psi} - \omega_0 \cdot \dot{\psi}_b$$
$$\dot{\omega}_z \approx \ddot{\theta} \qquad\qquad\qquad\qquad\qquad\qquad (14)$$
$$\dot{\omega}_z \approx \ddot{\psi} + \omega_0 \cdot \dot{\phi} + \omega_0 \cdot \dot{\phi}_b,$$

bei der die Voreinstellungs-Winkelgeschwindigkeiten $\Phi_b$, $\Theta_b$, und $\Psi_b$ im Endzustand zu null werden.

Linearisierung der Bewegungsgleichungen

Einsetzen der Gln. (13, 14) in (7) ergibt die folgenden linearisierten Bewegungsgleichungen, welche aber immer noch axial miteinander verkoppelt sind:

$$\left[ \begin{array}{l} I_x\ddot{\phi} - \left[h_y + \omega_0\left(I_z - I_y\right)\right]\omega_0(\phi + \phi_b) - \left[h_y + \omega_0\left(I_z - I_y + I_x\right)\right]\dot{\psi} + h_z\left(\dot{\theta} - \omega_0\right) + \dot{h}_x \\ I_y\ddot{\theta} + h_x\psi + h_z\omega_0(\psi + \psi_b) - h_z\dot{\phi} + h_x\omega_0(\phi + \phi_b) + \qquad\qquad\qquad \dot{h}_y \\ I_x\ddot{\psi} - \left[h_y + \omega_0\left(I_x - I_y\right)\right]\omega_0(\psi + \psi_b) + \left[h_y + \omega_0\left(I_z - I_y + I_x\right)\right]\dot{\phi} - h_x\left(\dot{\theta} - \omega_0\right) + \dot{h}_z \end{array} \right]$$

$$= \underline{T}_C + \underline{T}_D + \underline{T}_G$$

$$(15)$$

Diese können weiter vereinfacht werden können, indem

- folgende Größenabschätzungen gemacht werden:

$$h_y \gg \max\left(I_x \cdot \omega_0, I_y \cdot \omega_0, I_z \cdot \omega_0\right), \omega_0 \gg \max\left(|\dot{\phi}|, |\dot{\theta}|, |\dot{\psi}|\right) \qquad (16)$$

- alle Terme mit $\dot{h}_x$ oder $\dot{h}_z$, die mit einem kleinen Winkel bzw, einer kleinen Winkelgeschwindigkeit multipliziert werden, vernachlässigt werden,

- alle Terme mit $\dot{h}_y$, die mit einem kleinen Winkel multipliziert werden, vernachlässigt werden,

- angenommen wird, daß die Komponenten von $\underline{T}_G$ ebenfalls vernachlässigbar sind.

Dadurch vereinfachen sich die Bewegungsgleichungen (15) weiter:

$$I_x \cdot \ddot{\phi} - h_y \cdot \omega_o \cdot \phi - h_y \cdot \dot{\psi} - h_z \cdot \omega_o - h_y \cdot \omega_o \cdot \phi_b + \quad \dot{h}_x \qquad \approx T_{cx} + T_{dx}$$

$$I_y \cdot \ddot{\theta} + (h_z \cdot \omega_o \cdot \psi_b + h_x \cdot \omega_o \cdot \phi_b) + \qquad \qquad \dot{h}_y \qquad \approx T_{cy} + T_{dy} \qquad (17)$$

$$I_z \cdot \ddot{\psi} - h_y \cdot \omega_y \cdot \psi + h_y \cdot \phi + h_x \cdot \omega_o - h_y \cdot \omega_o \cdot \psi_b + \quad \dot{h}_z \qquad \approx T_{cz} + T_{dz}$$

Linearisierung der Bewegungsgleichungen für den Reglerentwurf

Der Regler versucht, den Drall des Raumflugkörpers inertial konstant zu halten, d.h. daß der Drallvektor mit dem Orbit-Winkelgeschwindigkeitsvektor trotz Drehbewegungen des Raumflugkörpers gleichgerichtet bleibt.
Deshalb sollte der Drallsatz im Orbitreferenz-Koordinatensystem angewendet werden:

$$\dot{\underline{h}}_0^{(0)} + \underline{\omega}_o \times \underline{h}_o = \underline{T}_C{}^o + \underline{T}_D{}^o + \underline{T}_G{}^o, \qquad (18)$$

wobei die Drehmomente auf der rechten Seite von Gl. (18) nun bezogen auf das Orbitreferenzsystem angegeben sind.
Die Ausdrücke in Gl. (18) ergeben sich wie folgt:

- $\underline{\omega}_o$ ist in Gl. (11) definiert,

-
$$\underline{h}_o = \underline{L}_{o/s} \cdot \underline{h}_s \qquad (19)$$

mit

$$\underline{L}_{o/s} = \underline{L}_{s/o}{}^T \qquad (20)$$

und

$$\underline{h}_s = [(I_x \cdot \omega_x + h_x), (I_y \cdot \omega_y + h_y), (I_z \cdot \omega_z + h_z)]^T. \qquad (21)$$

Deshalb erhält man nach Einsetzen von Gln. (20, 21) in Gl. (19):

$$\underline{h}_0 = \left| \begin{array}{l} (I_x \cdot \omega_x + h_x) - (I_y \cdot \omega_y + h_y) \cdot \Delta\psi + (I_z \cdot \omega_z + h_z) \cdot \Delta\theta \\[2mm] (I_x \cdot \omega_x + h_x) \cdot \Delta\psi + (I_y \cdot \omega_y + h_y) - (I_z \cdot \omega_z + h_z) \cdot \Delta\phi \\[2mm] -(I_x \cdot \omega_x + h_x) \cdot \Delta\theta + (I_y \cdot \omega_y + h_y) \cdot \Delta\phi + (I_z \cdot \omega_z + h_z) \end{array} \right| . \qquad (22)$$

Einsetzen von Gl. (22) in Gl. (18) ergibt mit den üblichen Näherungen für kleine Winkel und Winkelgeschwindigkeiten im stationären Zustand:

$$I_x \cdot \dot{\omega}_x - h_y \cdot \omega_0 \cdot \Delta\phi - h_y \cdot \Delta\dot{\psi} - h_z \cdot \omega_0 + h_x \cdot \omega_0 \cdot \Delta\theta + \dot{h}_x \approx T_{cx}^{\ o} + T_{dx}^{\ o}$$

$$I_y \cdot \dot{\omega}_y + \qquad\qquad\qquad\qquad\qquad\qquad \dot{h}_y \approx T_{cy}^{\ o} + T_{dy}^{\ o} \qquad (23)$$

$$I_z \cdot \dot{\omega}_z - h_y \cdot \omega_0 \cdot \Delta\psi + h_y \cdot \Delta\dot{\phi} + h_x \cdot \omega_0 - h_z \cdot \omega_0 \cdot \Delta\theta + \dot{h}_z \approx T_{cz}^{\ o} + T_{dz}^{\ o} .$$

Die Roll-Gier Dynamik ist nun von der Nick-Dynamik entkoppelt.

Abschließend werden Gl. (9, 14) in Gl. (23) eingesetzt und fiir die Drallrad-Reglermomente wird die Schreibweise

$$\underline{T}_W = [-\dot{h}_x, -\dot{h}_y, -\dot{h}_z]^T \qquad\qquad (24)$$

eingeführt, so daß sich die Bewegungsgleichungen des zu regelnden Systems ergeben zu

$$I_x \cdot \ddot{\phi} - h_y \omega_0 \cdot \phi - h_y \cdot \dot{\psi} - (-\theta_b h_x + \phi_b h_y + h_z) \cdot \omega_0 \approx T_{wx} + T_{cx}^{\ o} + T_{dx}^{\ o}$$

$$I_y \cdot \ddot{\theta} \qquad\qquad\qquad\qquad\qquad \approx T_{wy} + T_{cy}^{\ o} + T_{dy}^{\ o} \qquad (25)$$

$$I_z \cdot \ddot{\psi} - h_y \omega_0 \cdot \psi + h_y \cdot \dot{\phi} + (h_x - \psi_b h_y + \theta_b h_z) \cdot \omega_0 \approx T_{wz} + T_{cz}^{\ o} + T_{dz}^{\ o} .$$

3.3 Herleitung des reduzierten Beobachters zur Gierwinkel-Bestimmung

3.3.1 Beobachter-Gleichungen

Der Gierwinkel kann während der Eklipse und im Kollinearitätsgebiet nicht aus Messungen von optischen Sensoren bestimmt werden. In diesen Fällen wird der Gierwinkel mit Hilfe eines Gierwinkel-Beobachters geschätzt, in welchen als Meßgröße nur der Rollwinkel eingeht.

Der Gierwinkel-Beobachter basiert auf den linearisierten Systemgleichungen für Roll- und Gierbewegung im Orbitreferenz-Koordinatensystem (Gl. (25)):

$$I_x \cdot \phi - h_y \omega_o \cdot \phi - h_y \cdot \psi - (-\theta_b h_x + \phi_b h_y + h_z) \cdot \omega_o = T_{wx} + T_{cx} + T_{dx} \qquad (26a)$$

$$I_z \cdot \psi - h_y \omega_o \cdot \psi + h_y \cdot \phi + (h_x - \psi_b h_y + \theta_b h_z) \cdot \omega_o = T_{wz} + T_{cz} + T_{dz}. \qquad (26b)$$

Die Terme $(-\theta_b h_x + \phi_b h_y + h_z) \cdot \omega_o$ und $(h_x - \psi_b h_y + \theta_b h_z) \cdot \omega_o$ enthalten Parameter und Variablen, welche entweder bekannt sind oder gemessen werden können. Deshalb können sie durch Drallrad-Reglermomente kompensiert werden und verschwinden daher aus den Systemgleichungen.

Die Drallrad-Reglermomente werden aufgespalten in

$$T_{wx} = T_{wxc} + T_{wxac} \qquad (27a)$$

$$T_{wz} = T_{wzc} + T_{wzac}, \qquad (27b)$$

und fiir $T_{wxc}$ und $T_{wzc}$ die entsprechenden Kompensationsterme angesetzt werden:

$$T_{wxc} = (-\theta_b h_x + \phi_b h_y + h_z)\omega_o \qquad (28a)$$

$$T_{wzc} = (h_x - \psi_b h_y + \theta_b h_z)\,\omega_o. \qquad (28b)$$

Der Beobachter basiert nun auf den folgenden vereinfachten Gleichungen:

$$I_x \cdot \ddot{\phi} - \omega_0 \cdot h_y \cdot \phi - h_y \cdot \dot{\psi} = T_{wxac} + T_{cx} + T_{dx} \qquad (29a)$$

$$I_z \cdot \ddot{\psi} - \omega_0 \cdot h_y \cdot \psi + h_y \cdot \dot{\phi} = T_{wzac} + T_{cz} + T_{dz}. \qquad (29b)$$

Es werden folgende Zustandsvariablen eingeführt:

$$H_z = -h_y \cdot \phi \qquad (30a)$$

$$H_x = h_y \cdot \psi, \qquad (30b)$$

so daß sich die Systemgleichungen (Gl. (26)) schreiben lassen als:

$$- (I_x/h_y) \cdot \ddot{H}_z + \omega_0 \cdot H_z - \dot{H}_x = T_{wxac} + T_{cx} + T_{dx} \qquad (31a)$$

$$(I_z/h_y) \cdot \ddot{H}_x - \omega_0 \cdot H_x - \dot{H}_z = T_{wzac} + T_{cz} + T_{dz}. \qquad (31b)$$

Sei

$$\Omega_{Nx} = h_y/I_x \qquad (32a)$$

und

$$\Omega_{Nz} = h_y/I_z. \qquad (32b)$$

Wenn $I_x$ und $I_z$ ungefähr gleich groß sind, so gilt

$$\Omega_N = \Omega_{Nx} \approx \Omega_{Nx}, \qquad (32c)$$

so daß Gln. (29) geschrieben werden können zu

$$\ddot{H}_z = \omega_0 \cdot \Omega_N \cdot H_z - \Omega_N \cdot \dot{H}_x - \Omega_N (T_{wxac} + T_{cx} + T_{dx}) \qquad (33a)$$

$$\ddot{H}_x = \omega_0 \cdot \Omega_N \cdot H_x + \Omega_N \cdot \dot{H}_z + \Omega_N (T_{wzac} + T_{cz} + T_{dz}) . \qquad (33b)$$

$H_z$ ist proportional zum Rollwinkel und kann gemessen werden. Daher kann auch die Ableitung berechnet werden. Der Koeffizient $\Omega_N$ ist ebenfalls bekannt, so daß der Term "$\Omega_N \cdot H_z$" aus Gl. (33b) kompensiert werden kann, wenn die Reglermomente entsprechend gewählt werden.

Durch diese Kompensation wandern die Eigenwerte des obigen Systems von $\pm j\omega_0$, $\pm j\Omega_N$ nach $\pm j\sqrt{(\omega_0 \cdot \Omega_N)}$, $\pm j\sqrt{(\omega_0 \cdot \Omega_N)}$.

Unter Verwendung des Zustandsvektors

$$\underline{x} = [H_z, \dot{H}_z, H_x, \dot{H}_x]^T \qquad (34)$$

läßt sich für Gln. (33) schreiben:

$$
\begin{vmatrix} \dot{H}_z \\ \ddot{H}_z \\ \dot{H}_x \\ \ddot{H}_x \end{vmatrix} =
\begin{vmatrix} 0 & 1 & 0 & 0 \\ \omega_0\Omega_N & 0 & 0 & -\Omega_N \\ 0 & 0 & 0 & 1 \\ 0 & 0 & \omega_0\Omega_N & 0 \end{vmatrix} \cdot
\begin{vmatrix} H_z \\ \dot{H}_z \\ H_x \\ \dot{H}_x \end{vmatrix} +
$$

$$
+ \begin{vmatrix} 0 & 0 \\ -\Omega_N & 0 \\ 0 & 0 \\ 0 & \Omega_N \end{vmatrix} \cdot
\begin{vmatrix} T_{wxac} & + T_{cx} & + T_{dx} \\ T_{wzac} & + T_{cz} & + T_{dz} \end{vmatrix}
\qquad (35)
$$

3.3.2 Untersuchung der Beobachtbarkeit

Um die Sensitivität des Beobachters bezüglich Störmomenten zu erhöhen, wird dem Beobachter als Meßgröße nicht $H_z$ sondern $\int H_z\, dt$ zugeführt. Die Systemgleichungen mit dem erweiterten Zustandsvektor werden so zu:

$$x = [\int H_z dt\ H_z\ H_z\ H_x\ H_x]^T \tag{34a}$$

$$
\begin{vmatrix} H_z \\ \dot{H}_z \\ \ddot{H}_z \\ \dot{H}_x \\ \ddot{H}_x \end{vmatrix}
=
\begin{vmatrix} 0 & 1 & 0 & 0 & 0 \\ 0 & 0 & 1 & 0 & 0 \\ 0 & \omega_0\Omega_N & 0 & 0 & -\Omega_N \\ 0 & 0 & 0 & 0 & 1 \\ 0 & 0 & 0 & \omega_0\Omega_N & 0 \end{vmatrix}
\cdot
\begin{vmatrix} \int H_z dt \\ H_z \\ \dot{H}_z \\ H_x \\ \dot{H}_x \end{vmatrix}
+
$$

$$
+
\begin{vmatrix} 0 & 0 \\ 0 & 0 \\ -\Omega_N & 0 \\ 0 & 0 \\ 0 & \Omega_N \end{vmatrix}
\cdot
\begin{vmatrix} T_{wx} + T_{cx} + T_{dx} \\ T_{wz} + T_{cz} + T_{dz} \end{vmatrix}
\tag{35}
$$

Die zugehörige Meßgleichung lautet:

$$\underline{y} = [1\ 0\ 0\ 0\ 0]\cdot\underline{x}, \tag{36}$$

so daß sich für die Beobachtbarkeitsmatrix ergibt:

$$
c =
\begin{vmatrix}
1 & 0 & 0 & 0 & 0 \\
0 & 1 & 0 & \omega_0\Omega_N & 0 \\
0 & 0 & 1 & 0 & \omega_0\Omega_N \\
0 & 0 & 0 & 0 & -\omega_0\Omega_N^2 \\
0 & 0 & 0 & -\Omega_N & 0
\end{vmatrix}
\tag{37}
$$

Die Beobachtbarkeitsmatrix hat vollen Rang. Das System mit Meßgröße $\int H_z dt$. ist daher beobachtbar.

3.4 Herleitung der Reglergleichungen für den Normalzustand

3.4.1 Regleranteil zur Entkopplung der Bahnbewegung

Als Basis werden die Grundgleichungen in Gln. (33) verwendet:

$$H_z - \omega_0 \cdot \Omega_N \cdot H_z + \Omega_N \cdot H_x = - \Omega_N(T_{wxac} + T_{cx} + T_{dx}) \tag{38a}$$

$$H_x - \omega_0 \cdot \Omega_N \cdot H_x - \Omega_N \cdot H_z = \Omega_N (T_{wzac} + T_{cz} + T_{dz}). \tag{38b}$$

$$\Omega_N = \frac{h_y}{\sqrt{I_x \, I_z}} \rightarrow \text{sign } h_y = -1 \tag{38c}$$

Um die Flexibilität des Solargenerators zu dämpfen und Meßrauschen zu unterdrücken, wird ein zusätzlicher Filter für die Meßgröße benötigt. Ein typisches Blockschaltbild für den Regler zeigt Bild 5. Darin ist der Sollwert für den Roll- und den Gierwinkel bereits abgezogen worden.

3.4.2 Zweiachsige Messung (Rollen, Gieren)

Als Regler für die x-Achse bzw. die z-Achse wird jeweils ein PDI-Regler gewählt:

$$T_{wxac} = -[K_{px} \cdot H_z^* + K_{Dx} \cdot \dot{H}_z^*] \cdot f_{NLx} - K_{Ix}\int H_z^* dt - \dot{H}_x^* \tag{40a}$$

$$T_{wzac} = [K_{pz} \cdot H_x^* + K_{Dx} \cdot \dot{H}_x^*] \cdot f_{NLz} + K_{Iz}\int H_x^* dt + \dot{H}_z^* \tag{40b}$$

* Gefiltertes Signal oder von Roll- und Giermessung stammend
Mit den obigen Reglergleichungen ergeben sich folgende geschlossene Übertragungsfunktionen, wenn Gln. (38, 40) Laplace-transfomiert werden und Gln. (38) in Gln. (40) eingesetzt werden
(Nichtlinearitäten in Bild 5 bleiben unberücksichtigt, d.h. $f_{NLx} = f_{NLz} = 1$):

$$H_z = \frac{s \cdot (T_{cx} + T_{dx})}{\left|\frac{I_x}{h_y}\right| s^3 + K_D s^2 + (K_p + \omega_0) s + K_I} \tag{41a}$$

$$H_x = \frac{- s \cdot (T_{cz} + T_{dz})}{\left|\frac{I_z}{h_y}\right| s^3 + K_D s^2 + (K_p + \omega_0) s + K_I} \tag{41b}$$

wobei

$$K_{Dx} = K_{Dz} = K_D, \; K_{Px} = K_{Pz} = K_P, \; K_{Ix} = K_{Iz} = K_I.$$

Für die integrierten Zustandsgrößen $H_z$ und $H_x$ gilt nach Integration im Laplace-Bereich:

$$\text{INT}(H_z) := K_I \int H_z^* dt = \frac{(T_{cx} + T_{dx})}{T_3^3 s^3 + T_2^2 s^2 + T_1 s + 1} \tag{42a}$$

$$INT(H_x):=K_I \int H_x^* dt = \frac{(T_{cz} + T_{dz})}{T_3^3 s^3 + T_2^2 s^2 + T_1 s + 1} \tag{42b}$$

Unter der Annahme, daß die Reglerbandbreite viel größer ist als die Orbit-Störmomente, können folgende Näherungen gemacht werden:

$$H_z = \frac{1}{K_I} \cdot (\dot{T}_{dx} + \dot{T}_{cx}) \tag{43a}$$

$$H_x = \frac{1}{K_I} \cdot (\dot{T}_{dz} + \dot{T}_{cz}) \tag{43b}$$

$$(T_{dx} + T_{cx}) = INT(H_z) \tag{43c}$$

$$(T_{dz} + T_{cz}) = INT(H_x) \tag{43d}$$

3.4.3 Einachsige Messung (Rollen) und Gier-Beobachter

Es wird von dem Fall ausgegengen, daß $H_x$ und $H_x$ (Gl. (28b)) nicht gemessen werden können. Dem Gierbeobachter wir als Meßgröße der rückgekoppelte Rollwinkel zugeführt, welcher Informationen über die Giergeschwindigkeit enthält und aus dem dann durch entsprechende Wahl der Beobachterparameter <u>h</u> Gierlage und Giergeschwindigkeit geschätzt werden können. Um dies einzusehen, betrachte man die Übertragungsfunktion des geschlossenen Rollregelkreises. Diese erhält man durch Einsetzen des Reglermomentes $T_{wxac}$ aus Gl. (40a) (ohne Entkopplungsanteil $H_x$, der als nicht meßbar angenommen wird) in Gl. (38a) und Laplace-Transformation:

$$H_z(s) = \frac{-s\Omega_{Nx}(-sH_x - T_{Dx}^*)}{[s^3 - \Omega_{Nx}[K_{Dx}s^2 + (K_{Px} + \omega_0)s + K_{Ix}]}, \tag{44a}$$

wobei die abkürzende Schreibweise

$$T_{Dx}^* = T_{dx} + T_{cx}; \tag{44b}$$

$$T_{Dz}^* = T_{dz} + T_{cz} \tag{44c}$$

$$\tilde{T}_{Dx} = T_{Dx}^* - \hat{T}_{Dx}, \tag{44d}$$

$$\tilde{T}_{Dz} = T_{Dz}^* - \hat{T}_{Dz}, \tag{44e}$$

eingeführt wurde.
Als Meßgröße wird das Signal

$$y = -K_{Ix}(\frac{1}{s} \cdot H_z + K_0 \cdot H_z) = \frac{K_I}{s} \cdot H_z(1 + K_0 s) \tag{44f}$$

verwendet, welches als gefiltertes Gierwinkelsignal betrachtet werden kann.

Einsetzen von Gl. (44a) in Gl. (44f) ergibt

$$y = \frac{- K_{Ix}(1 + K_0 s) \cdot \Omega_{Nx}}{[s^3 - \Omega_{Nx}[K_{Dx} s^2 + (K_{Px} + \omega_0)s + K_{Ix}} (sH_x + T_{Dx}^*) = F(s)(-sH_x - T_{Dx}^*) \qquad (44g)$$

### 3.4.3.1 Drallrad-Regelmomente

Die Regelmomente $T_{wcx}$ und $T_{wcz}$ in Gln. (28a, b) bleiben unverändert, da in sie keine Gierinformation einfließt.

Wie bereits oben erwähnt, enthält das Rollwinkel-Regelmoment $T_{wxac}$ in Gl. (40a) nun keinen Entkopplungsanteil $H_x$ mehr, d.h.

$$T_{wxac} = -[K_{Px}H_z^* + K_{Dx}\dot{H}_z^*]f_{NLx} - K_{Ix}\int H_z^* dt \qquad (45a)$$

Das Gierwinkel-Regelmoment $T_{wzac}$ besteht aus zwei Teilen,

$$T_{wzac} = T_{wzD} + T_{wzO}, \qquad (45b)$$

wobei $T_{wzD}$ den Entkopplungsanteil von der Rolldynamik zur Gierdynamik bezeichnet,

$$T_{wzD} = - \dot{H}_z^*, \qquad (45c)$$

und $T_{wzO}$ das mit Hilfe des Gierbeobachters gebildete Stellsignal

$$T_{wzO} = \underline{k}^T \hat{\underline{x}}. \qquad (45d)$$

### 3.4.3.2 Gierlage-Regler

Mit Hilfe der neuen Zustandsgrößen

$$x_1 = \omega_0 H_x \qquad (46a)$$

$$x_2 = \dot{H}_x \qquad (46b)$$

läßt sich Gl. (38 b) folgendermaßen schreiben:

$$\dot{\underline{x}} = A \cdot \underline{x} - \underline{b}\,\underline{k}^T \hat{\underline{x}} + \underline{b}\, T_{Dz}^* \qquad (47a)$$

mit

$$A = \begin{bmatrix} 0 & \omega_0 \\ -\Omega_{N0} & 0 \end{bmatrix}, \quad \underline{b} = \begin{bmatrix} 0 \\ \Omega_{N0} \end{bmatrix} \qquad (47b,c)$$

und der Schreibweise

$$\Omega_{N0} = |\Omega_N|. \tag{47d}$$

Aus den Gln. (46a, b) ergibt sich sogleich die Beziehung

$$x_2 = x_1 / \omega_0 \tag{47e}$$

Für den Beobachter wird die Struktur angesetzt

$$\dot{\underline{x}} = A \cdot \hat{x} - \underline{b} k^T \hat{\underline{x}} + \underline{h}(y - \hat{y}) + \underline{b} \cdot \hat{T}_{Dz} \tag{48a}$$

mit

$$y = F(s)(sH_x - T^{*}_{Dx}) = F(s) \cdot (\underline{c}^T \cdot \underline{x} - T^{*}_{Dx}) \tag{48b}$$

und

$$\hat{y} = \hat{F}(s) \, (\underline{c}^T \hat{\underline{x}} - \hat{T}_{Dx}) \tag{48c}$$

$$\underline{c}^T = [0 \ 1], \ \underline{k}^T = [k_1, k_2]. \tag{48 d, e}$$

Der Beobachtervektor $\underline{h}$ enthält die zu wählenden Beobachterparameter $h_1$ und $h_2$:

$$\underline{h}^T = [h_1, h_2]. \tag{48f}$$

Aus den obigen Gleichungen läßt sich der Schätzfehler $\tilde{x} = \underline{x} - \hat{x}$ folgt berechnen:

$$s\underline{x} = [A\underline{x} - \underline{h} \ \underline{c}^T \cdot F(s)]\underline{x} + \underline{h} \ \underline{c}^T F(s)\underline{x} - \underline{b} \ \underline{k}^T \hat{\underline{x}} + \underline{b}T^{*}_{Dz} \tag{49a}$$

$$s\hat{\underline{x}} = [A\hat{\underline{x}} - \underline{h} \ \underline{c}^T \cdot \hat{F}(s)]\hat{\underline{x}} + \underline{h} \ \underline{c}^T \hat{F}(s)\hat{\underline{x}} - \underline{b} \ \underline{k}^T \hat{\underline{x}} - \underline{h} \cdot F(s)T^{*}_{Dx} + \underline{h}\hat{F}(s)\hat{T}_{Dz} + \underline{b}\hat{T}_{Dz} \tag{49b}$$

Ferner gilt

$$F(s) \approx \hat{F}(s) \ ; \ F_{SS} = \hat{F}_{SS} = 1 \tag{49c}$$

und für $s \to 0$

$$F(s) = \hat{F}(s)$$

Für den Schätzfehler gilt dann:

$$s\tilde{\underline{x}} = [A - \underline{h}\underline{c}^T\hat{F}(s)]\tilde{\underline{x}} + \underline{b}\left(T_{Dz}^* - \hat{T}_{Dz}\right) + \underline{h}\cdot\hat{F}(s)\left(T_{Dx}^* - \hat{T}_{Dx}\right) \qquad (49d)$$

$$\tilde{x} = [sE - A + \underline{h}\ \underline{c}^T\hat{F}(s)]^{-1}[\underline{b}\tilde{T}_{Dx} + \underline{h}\hat{F}(s)\tilde{T}_{Dz}] \qquad (49e)$$

$$F_{ss} = |F(jw_{ss})| = |\ddot{F}(jw_{ss})| = 1\ ;\ 0 < \omega_{ss} \le \omega_{\ Beobachter}$$

mit der Schreibweise

$$\tilde{T}_{Dx} = T_{Dx}^* - \hat{T}_{Dz} \qquad (49f)$$

$$\tilde{T}_{Dz} = T_{Dz}^* - \hat{T}_{Dz} \qquad (49g)$$

Letztendlich erhält man durch Einsetzen der Gleichungen (39 c, d) und (45 a, b) in (39 a, b) für die Reglermomente zur Regelung der Roll- und Gierdynamik:

$$T_{wx} = -(-\theta_b\cdot h_x + \phi_b h_y + h_z)\cdot\omega_0\cdot\Omega_N - [K_{Px}H_z^* + K_{Dx}\dot{H}_z^* + K_{Ix}\int H_z^* dt] \qquad (49h)$$

$$T_{WZ} = (\theta_b\cdot h_z + \psi_b h_y + h_x)\cdot\omega_0\cdot\Omega_N + \dot{H}_z^* + \underline{k}^T\cdot\hat{\underline{x}} \qquad (49i)$$

Auf den Bildern 6 und 7 sind ein Blockschaltbild für die Drallrad-Regelung bzw. ein Blockschaltbild fiir den Beobachter dargestellt.

Stabilität:

Gln. (49 a) und (49 d) führen auf

$$s\underline{x} = [A - \underline{b}\ \underline{k}^T]\cdot\underline{x} + \underline{b}\ \underline{k}^T\tilde{x} + \underline{b}T_{Dz}^* \qquad (50a)$$

$$s\tilde{\underline{x}} = [A - \underline{h}\ \underline{c}^T\hat{F}(s)]\tilde{\underline{x}} + \underline{b}\cdot\tilde{T}_{Dx} + \underline{h}\cdot\hat{F}(s)\cdot\tilde{T}_{Dz} \qquad (50b)$$

$$\begin{bmatrix} sE - A + \underline{bk}^T & \underline{bk}^T \\ 0 & sE - A + \underline{hc}^T \cdot \hat{F}(s) \end{bmatrix} \begin{bmatrix} \underline{x} \\ \tilde{\underline{x}} \end{bmatrix} = \begin{bmatrix} \underline{bT}_{Dz}^* \\ \underline{b}\tilde{T}_{Dx} + \underline{h}\hat{F}(s) \cdot \tilde{T}_{Dz} \end{bmatrix} \quad (50c)$$

Stabilität des rückgekoppelten Systems ist garantiert, wenn die charakteristische Gleichung det $A_{cl}(s) = 0$ nur Nullstellen mit einem positiven Realteil hat.

Nach Gl. (50c) gilt für die charakteristische Gleichung:

$$\det A_{cl} = \deg (sE - A + \underline{bk}^T) \cdot \det (sE - A + \underline{hc}^T \cdot F(s)). \quad (50d)$$

Demnach wird deutlich, daß auch mit diesem besonderen Beobachter weiterhin das Separationsprinzip gültig ist, d.h. der Einfluß des Gier-Reglers und des Gier-Beobachters auf die Stabilitität des rückgekoppelte Systems sind voneinander unabhängig. Allerdings beeinflußt die rückgekoppelte Übertragungsfunktion des Roll-Regelkreises, F(s), die Beobachterparameter und das Stabilitätsverhalten.

Der Regler im Roll-Regelkreis muß so entworfen werden, daß der Beobachter nicht durch die Reglerdynamik gestört wird. Typischerweise ist die Bandbreite des Rollregelkreises ungefähr um einen Faktor 10 größer als die Beobachter-Bandbreite.

Die Dynamik der Störmomente im Normalbetrieb ist sehr langsam, da die Störmomente hauptsächlich aus Konstanten bzw. Sinustermen der Frequenz $\omega_0$ und $2\omega_0$ bestehen. Im niedrigen Frequenzbereich aber gilt $|F(j\omega)| \approx 1$, so daß im Normalbetrieb der Einfluß der Dynamik des Roll-Regelkreises auf Giergenauigkeit und Regelgüte vernachlässigbar ist.

3.4.3.3 Schätzfehler aufgrund der Störmomente

Folgende Näherungen werden durchgeführt:

$$|F(j\omega)| \approx 1 \text{ für } 0 \leq \omega \leq \omega_y; \quad (51a)$$

$$T_{Dx}(j\omega) \approx 0, T_{Dz}(j\omega) \approx 0 \text{ für } \omega > \omega_y \quad (51b)$$

Einsetzen von Gl. (51a) in Gl. (50b) und Matrizenmanipulationen ergeben:

$$\tilde{\underline{x}} = \frac{\begin{bmatrix} h_z + s & -(h_1 - \omega_0) \\ \Omega_{N0} & s \end{bmatrix} \left( \begin{bmatrix} h_1 \\ h_2 \end{bmatrix} \tilde{T}_{Dx} + \begin{bmatrix} 0 \\ \Omega_{N0} \end{bmatrix} \tilde{T}_{Dz} \right)}{s^2 + h_2 - h_1\Omega_N + \omega_0\Omega_N} \quad (52a)$$

$$\tilde{x}_1 = \frac{(h_1 \cdot s + \omega_0 h_2)\tilde{T}_{Dx} + (-\Omega_{N0}h_1 + \omega_0\Omega_{N0})\tilde{T}_{Dz}}{s^2 + h_2 s - h_1\Omega_{N0} + \omega_0\Omega_{N0}} \quad (52b)$$

$$\tilde{x}_2 \;=\; \frac{\left(h_1\Omega_{N0}+sh_2\right)\tilde{T}_{Dx}+\Omega_N\cdot s\tilde{T}_{Dz}}{s^2+h_2 s-h_1\Omega_{N0}+\omega_0\Omega_{N0}} \tag{52c}$$

Die Störmomente $\tilde{T}_{Dx}$ und $\tilde{T}_{Dz}$ berechnen sich aus den Gln. (44 b, c, d, e).

3.4.3.4 Abschätzen des Gierlage- und Giergeschwindigkeitsfehlers

Gemäß Gl. (50a) ergibt sich für den Zustand $\underline{x}$ nach Laplace-Transformation:

$$\underline{x} \;=\; \frac{\begin{bmatrix} s+k_2\Omega_{N0} & \omega_0 \\ -\Omega_{N0}(1+k_1) & s \end{bmatrix}\left[\begin{Bmatrix} 0 \\ \Omega_{N0}(k_1\tilde{x}_1+k_2\tilde{x}_2) \end{Bmatrix}+\begin{Bmatrix} 0 \\ \Omega_{N0}\cdot T^{*}_{Dz} \end{Bmatrix}\right]}{s^2+k_2\Omega_N s+\Omega_N(1+k_1)} \tag{53a}$$

$$x_1 \;=\; \frac{\omega_0\Omega_{N0}\left(k_1\tilde{x}_1+k_2\tilde{x}_2+T^{*}_{Dz}\right)}{s^2+k_2\Omega_{N0}s+\omega_0\Omega_{N0}(1+k_1)} \tag{53b}$$

Dabei gilt für die Orbitfrequenz $\omega_0 = 7.27 \cdot 10^{-5}$ l/s und für die Komponenten der Zustandsvektorrückführung

$$k_1 = 1/\omega_0 \cdot k_p; \qquad k_p \approx K_P \tag{53c}$$

$$k_2 = k_d; \qquad k_d \approx K_D. \tag{53d}$$

Werden die Komponenten so gewählt, daß $k_1 \gg 1$ und $k_1 \gg k_2$ ist, so ergeben sich für die Stationärwerte von $x_1$ und $x_2$:

$$x_1 \;=\; \frac{k_1}{1+k_1}\tilde{x}_1+\frac{k_2}{1+k_1}\tilde{x}_2+\frac{T^{*}_{DZ}}{1+k_1} \tag{54a}$$

und für sehr große Werte von $k_1$

$$x_1 = \tilde{x}_1 \tag{54b}$$

und somit auch

$$\dot{x}_1 = \dot{\tilde{x}}_1. \qquad\qquad (54c)$$

Wegen Gl. (47e) gilt dann

$$x_2 = \tilde{x}_2. \qquad\qquad (54d)$$

Gln. (54c, d) zeigen, daß Lage- und Winkelgeschwindigkeitsfehler durch ihre Schätzfehler abgeschätzt werden können.

3.4.3.5 Prädiktion der Roll- und Gier-Störmomente ohne externe Regelmomente

Die Regelgüte des Roll-Regelkreises kann unter Berücksichtigung von Gl. (44a) für kleine Werte von $s=j\omega$ und Rücktransformation in den Zeitbereich

$$H_z = \phi \cdot \left| h_y \right| \approx \frac{1}{K_I} \cdot \left( \dot{T}_{dx} + \ddot{H}_x \right) << 1 \to \phi \approx 0° \qquad\qquad (55a)$$

Hierbei wird angenommen, daß $K_I$ größer als die Amplitude des Störmoments $T_{dx}$ ist.

3.4.3.5.1 Gierfehler in Kollinearitätsgebieten bei Störmomentenschätzung und -prädiktion

Vor und nach diesem Gebiet stehen Roll- und Gierwinkel-Messungen zur Verfügung. Aus Gln. (43 c , d) ist ersichtlich, daß die unbekannten Störmomente durch Integration der als bekannt vorausgesetzten Größen $H_x$ und $H_z$ einfach geschätzt werden können.

Im folgenden wird ein Verfahren zur Schätzung, Prädiktion und Kompensation der Störmomente vorgestellt, mit der sich Lagefehler in Kollinearitätsgebieten weiter verbessern lassen.

Diese Gebiete sind wohlbekannt und können über einen On-Board-Rechner bestimmt werden. Das Verfahren teilt sich in vier Phasen auf.

In den Phasen 1 und 3 sind der Roll- und der Gierwinkel bekannt. Mit Hilfe der Gln. (43a-d) können die Störmomente und ihre Ableitungen sehr genau bestimmt werden. In Phase 2, welche ungefähr 1/8 der Periode (24h-Tag) in Anspruch nimmt, wird zu dem speziellen Gierbeobachter für den Gierwinkel-Regelkreis umgeschaltet (siehe Abschnitt 3.4.3). Dann werden die Störmomente im Modell um den geschätzten Anteil mit Hilfe zeitabhängiger Funktionen vermindert, deren Herleitung nun beschrieben wird.

Phasen 1a, 3a sind kurze Übergangsphasen von Gierschätzung zu Giermessung und umgekehrt. Die Störmomentenschätzung beginnt, wenn ein stationärer Zustand erreicht ist.

Ein Beispiel für eine einfache zeitabhängige Funktion zur Störmomentenschätzung ist das Polynom 2. Ordnung

$$\hat{T}_D \cdot (\Delta t) = A_0 + B_0 \cdot \Delta t + C_0 \cdot D \Delta t^2 \qquad \text{mit } \Delta t = t-t_1 \qquad\qquad (55b)$$

für $t_1 \le t \le t_3$ sind $A_0$, $B_0$ und $C_0$ zu bestimmende Koeffizienten, die aus bekannten Funktionswerten berechnet werden:

$$A_0 = \bar{T}_{Di}(t_1) \qquad\qquad (55c)$$

$$B_0 = \dot{\bar{T}}_{Di}(t_1) \qquad\qquad (55d)$$

$$C_0 = \frac{\bar{T}^*_{Di}(t_3) - \bar{T}_{Dz}(t_1)}{(t_3 - t_1)^2} - \frac{\dot{\bar{T}}_{Di}(t_1)}{(t_3 - t_1)} \tag{55e}$$

Die Werte $T_{Di}(t_1)$, $\dot{\bar{T}}_{Di}(t_1)$, $\bar{T}_{Di}{}^*(t_3)$, $i = x,z$, können aus Gln. (43a-d) hergeleitet werden.

Zunächst erscheint es problematisch, den Wert von $T_{Di}(t_3)$ bestimmen zu können, bevor der Satellit das Kollinearitätsgebiet verläßt. Doch unter der Annahme, daß die Änderungen der Störgröße vom einen zum anderen Tag gering sind (kleiner als 3 %), kann fiir den Prädiktionsalgorithmus der Wert von $T_{Di}(t_3)$ vom Vortag verwendet werden,

$$\bar{T}^*_{Di}(t_3) = \bar{T}_{Di}(t_3 - 1 \text{ Tag}) \tag{56}$$

Unter Verwendung der Beobachterparameter $h_1 = 0$, $h_2 = h_2{}^* \cdot \Omega_{N0}$ erhält man aus Gl. (54b) fiir den stationären Gierwinkelfehler

$$\psi(t) = \left( h_2^* \cdot \left( T_{dx}(t) - \hat{T}_{Dx}(t) \right) + \left( T_{dz}(t) - \hat{T}_{Dz}(t) \right) \right) \cdot \frac{57.3°}{|h_y| \cdot \omega_0} \tag{57}$$

Die Genauigkeit des Gierwinkelfehlers kann im Kollinearitätsgebiet um einen Faktor 3-5 verbessert werden.

3.4.3.5.2 Gierfehler in Kollinearitätsgebieten ohne Störmomentenschätzung und -prädiktion

In diesem Fall erhält man direkt aus Gl. (54b) einen Gierwinkelfehler von

$$\psi(t) = \left[ \frac{h_2}{\Omega_{N0}} \cdot T_{dx}(t) + T_{dz}(t) \right] \cdot \frac{57.3°}{|h_y| \cdot \omega_0} \tag{58}$$

3.4.4 Abschätzung der Roll- und Gierregelgüte bei Verwendung äußerer Regelmomente zur Drallentladung

3.4.4.1 Roll- und Giermessung

Von den Gln. (24, 39) ist bekannt, daß für die Drallradmomente gilt:

$$T_{wx} = -\dot{h}_x = T_{wxc} + T_{wxac} \tag{59a}$$

$$T_{wz} = -\dot{h}_z = T_{wzc} + T_{wzac}. \tag{59b}$$

Es ist technisch nicht möglich, die Drallradmomente während der Missionsdauer konstant zu halten, da sonst die Geschwindigkeit der Drallräder gegen unendlich gehen würde. Deshalb werden die Drallräder "entladen", d.h. die Drallradmomente werden über einen äußeren, langsameren Regelkreis auf null gefahren. Im folgenden werden die dazu benötigten Systemgleichungen hergeleitet.

Im stationären, ausgeregelten Zustand gelten die Beziehungen

$$|H_z|, |H_x| \ll 1, |\dot{H}_z|, |\dot{H}_x| \ll |H_z|, |H_x| \approx 0, \tag{60a}$$

sowie die Gln.(43 c, d), d.h.

$$\text{INT } (H_z) = T_{dx} + T_{cx} \tag{60b}$$

$$\text{INT } (H_x) = -(T_{dz} + T_{cz}). \tag{60c}$$

Einsetzen der Gln. (60) in Gln. (39c, d) und (40a, b) ergeben die Systemgleichungen der Dralkäder in x- und z-Richtung

$$\dot{h}_x - \omega_0(h_z + \phi_b h_y - \theta_b h_x) = T_{dx} + T_{cx} \tag{61a}$$

$$\dot{h}_z - \omega_0(h_x + \psi_b h_y - \theta_b h_z) = T_{dz} + T_{cz} \tag{61b}$$

Die äußeren Drallentladungs-Regelmomente werden proportional zum Raddrall zum Raddrall zurückgeführt:

$$T_{cx} = -K_x \, h_x \tag{61c}$$

$$T_{cz} = -K_z \, h_z. \tag{61d}$$

Transformation von Gln. (61 a, b) in den s-Bereich ergibt:

$$\begin{bmatrix} h_x \\ h_z \end{bmatrix} = \frac{\begin{bmatrix} s+K_z+\omega_0\theta_B & +\omega_0 \\ -\omega_0 & s+K_x+\omega_0\theta_B \end{bmatrix}\begin{bmatrix} T_{dx}(s) \\ T_{dz}(s) \end{bmatrix} + \begin{bmatrix} \phi_b \cdot h_y \cdot \omega_0 \\ \psi_b \cdot h_y \cdot \omega_0 \end{bmatrix}}{s^2+(K_x+K_z+2\omega_0\theta_B)s+\omega_0^2+(K_x+\omega_0\theta_B)(K_z+\omega_0+\theta_B)}. \tag{62}$$

Der Rollwinkel $\phi$ und der Gierwinkel $\psi$ des rückgekoppelten Systems können über die in den s-Bereich transformierten Gln. (7a, b) abgeschätzt werden:

$$\phi = \frac{1}{K_{lx}} \, s \cdot (T_{dx}(s) - K_x \cdot h_x(s)) \cdot \frac{57.3}{|h_y|} \text{ [deg/rad]}, \tag{63a}$$

$$\psi = \frac{1}{K_{lz}} \, s \cdot (T_{dz}(s) - K_z \cdot h_z(s)) \cdot \frac{57.3}{|h_y|} \text{ [deg/rad]}, \tag{63b}$$

wobei in die Gln. (63a, b) für $h_x$ (s) und $h_z$ (s) die in Gl. (62) ermittelten Beziehungen eingesetzt werden.
Normalerweise ist $K_{li}$ viel größer als die Amplituden der Störmomente im Normalbetrieb. Die Größe des Roll- und Gierwinkels, d.h. die Genauigkeit, kann beliebig klein eingestellt werden und hängt nicht mehr wie bisher primär vom Sensorrauschen und von Radreibungsmomenten ab.

3.4.4.2 Rollwinkelmessung und Gierwinkelbeobachter bei Verwendung eines Kompensationsmomentes

3.4.4.2.1 Grundgleichungen

Gleichungen (61a) und (61c) gelten auch in diesem Fall:

$$\dot{h}_x - \omega_0\Omega_N(h_z - \theta_b \cdot h_x) = T_{dx} + T_{cx} + \theta_b \cdot h_y \cdot \omega_0\Omega_N \tag{64a}$$

$$T_{cx} = -K_x \cdot h_x - \ddot{T}_{ccx}, \, H_z, \, \dot{H}_z \approx 0 \tag{64b}$$

mit dem Kompensationsmoment $T_{ccx}$.

Das Drallradmoment in z-Richtung bei Verwendung eines Beobachters lautet nach Gl. (49g):

$$-\dot{h}_z = \omega_0\Omega_N(h_x + \theta_b h_z) + \dot{H}_z^* - \underline{\dot{k}}^T \underline{\hat{x}} + \phi_b hy \cdot \omega_0\Omega_N. \tag{65}$$

Im folgenden wird nun gezeigt, wie die Schätzgrößen ($\underline{x}$) in Gl, (65) eliminiert werden können. Zunächst werden Gln, (47e) und (49a) in den s-Bereich transformiert,

$$-\underline{bk}^T\underline{x} = (sE - A) \underline{x} - \underline{b}T_{Dz}^* \tag{66a}$$

$$0 = sx_1 - \omega_0 x_2. \tag{66b}$$

Mit der Matrix A aus Gl. (47b) und dem Eingangsvektor $\underline{b}$ aus Gl. (47c) ergibt sich für die zweite Zeile von Gl. (66a):

$$-\Omega_{N0} \cdot \underline{k}^T \underline{x} = \Omega_{NO}x_1 - sx_2 - \Omega_N T_{Dz}^* \tag{66c}$$

Einsetzen von Gl.(66b) in Gl.(66c) und Rücktransformation in den Zeitbereich ergibt

$$-\underline{k}^T\underline{x} = x_1 - \ddot{x}_1/(\Omega_{NO}\omega_0) - T_{Dz}^*. \tag{66d}$$

Unter Vernachlässigung von $\ddot{x}_1/(\Omega_{N\omega0})$ ergibt sich

$$-\underline{k}^T\underline{x} = \tilde{x}_1 - T_{Dz}^* \tag{66e}$$

und mit Gl. (54b)

$$-\underline{k}^T\underline{x} = x_1 - T_{Dz}^*. \tag{66f}$$

Aus Gi. (52b) erhält man für kleine s und dem Beobachterparameter $h_1 = 0$

$$-\underline{k}^T \underline{x} = {}^{h_z}\!/\!\Omega_{N0} \cdot \tilde{T}_{Dx} + \tilde{T}_{Dz} - T_{Dz}^* \qquad (66g)$$

Einsetzen von Gln. (44b, c) und (49f, g) in Gl. (66g) ergibt

$$-\underline{k}^T \underline{x} = {}^{h_z}\!/\!\Omega_{N0}\left(T_{dx} + \hat{T}_{Dx} + T_{cx}\right) - \hat{T}_{Dz} \qquad (66k)$$

Einsetzen von Gl. (66k) in Gl. (65) ergibt mit Hz* $\square$ 0

$$\dot{h}_x + \omega_0(h_x + \theta_B h_z) + \frac{h_z}{\Omega_{N0}}(T_{dx} + \hat{T}_{Dx} + T_{cx}) - \hat{T}_{Dz} + \psi_b h_y \omega_0 = 0 \qquad (67)$$

Laplace-Transformieren der Gln. (65, 67) und Zusammenfassen in Vektorschreibweise ergibt:

$$\begin{bmatrix} h_x \\ h_z \end{bmatrix} = \begin{bmatrix} s + \omega_0\theta_b & \omega_0 \\ -\omega_0 + \frac{h_z}{\Omega_{N0}}K_x & s + K_x + \omega_0 \cdot \theta_0 \end{bmatrix} \cdot \qquad (68)$$

$$\frac{\left(\begin{bmatrix} T_{Dx}^0 \\ -\frac{h_z}{\Omega_{N0}} \cdot T_{Dx}^0 \end{bmatrix} + \begin{bmatrix} 0 \\ +\frac{h_z}{\Omega_N} \end{bmatrix}\hat{T}_{Dx} + \begin{bmatrix} 0 \\ 1 \end{bmatrix}T_{Dz} + \begin{bmatrix} \phi_b \cdot h_y \cdot \omega_0 \\ \psi_b \cdot h_y \omega_0 \end{bmatrix}\right)}{s^2 + (K_x + \omega_0\theta_B)s + \omega_0^2 - \frac{h_z}{\Omega_{N0}} \cdot K_x \cdot \omega_0 + \omega_0\theta_B(K_x + \omega_0\theta_B)}$$

mit der Schreibweise

$$T_{Dx}{}^0 = T_{dx} - \hat{T}_{ccx} \qquad (69a)$$

$$T_{Dz}{}^0 = T_{dz} - \hat{T}_{ccz} \qquad (69b)$$

Dabei sind $T_{Dx}$, und $T_{Dz}$ geschätzte Störmomente, welche in den Beobachter eingehen.
Die äußeren Regelmomente zur Drallentladung lauten:

$$T_{cx} = -K_x h_x - \ddot{T}_{ccx} \qquad (70a)$$

$$T_{cz} = -K_z h_z - \ddot{T}_{ccz}. \qquad (70b)$$

Die Momente $\hat{T}_{ccx}$ und $\hat{T}_{ccz}$ sind äußere Kompensationsmomente für die Störmomente in Rollen und Gieren.

Aus Gl. (68) ist zu erkennen, daß nur äußere Momente in x-Richtung mit den Drallradkomponenten $h_x$ oder $h_z$ beobachtet werden können.

3.4.4.2.2 Einfluß der Roll- und Giervoreinstellungswinkel

Von Gl. (68) unter Vernachlässigung von Termen höherer Ordnung

$$h_{xb} = \frac{\omega_0^2 \cdot \psi_b \cdot h_y}{\omega_0^2 - \dfrac{h_z}{\Omega_{N0}} \cdot K_x \cdot \omega_0} \cdot \frac{\psi_b \cdot h_y}{\left(1 - \dfrac{h_z}{\Omega_{N0}} \cdot \dfrac{K_x}{\omega_0}\right)} \qquad (71a)$$

$$h_{zb} = -\phi_b \cdot h_y + \psi \cdot h_y \cdot \frac{\dfrac{K_x}{\omega_0}}{\left(1 - \dfrac{h_z}{\Omega_{N0}} \cdot \dfrac{K_x}{\omega_0}\right)} \qquad (71b)$$

Diese Beziehungen werden in der weiteren Untersuchung für den Drallvektor verwendet.

3.4.4.2.3 Gierwinkelfehler durch Störmomente

Die Störmomente im Normalbetriebszustand lassen sich im Satelliten-Koordinatensystem darstellen als

$$T_{dx} = A_{0x} + A_I \cos \omega t - T_{DxR}(\omega, t) \qquad (72a)$$

$$T_{dz} = A_{0z} - A_I \sin \omega t - T_{DzR}(\omega, t) \qquad (72b)$$

Die Anteile $A_{0x}$, $A_{0z}$ stammen von der unsymmetrischen Konfiguration des Raumflugkörpers her und sind abhängig von den Reflektionskoeffizienten und vom Sonnenvektor. Sie sind abhängig von der Jahreszeit und werden über einen Tag als konstant angenommen. Zwar sind $A_{0x}$, $A_{0z}$ nicht einfach zu bestimmen, aber das Verhältnis $A_{0x}/A_{0z}$ ist im allgemeinen gut bekannt. Wenn also ein Anteil bestimmt ist, kann über das bekannte Verhältnis zwischen den Anteilen der andere Anteil berechnet werden.

Die einflußreichste Komponente der Störmomente $T_{Dx}$, $T_{Dz}$ ist der inertial-konstante Anteil $A_I$, welcher direkt von der Verschiebung des Schwerpunkts, der unsymmetrischen Form des Solargenerators den Reflektionskoeffizienten, dem Sonnenvektor und weiteren jahreszeitabhängigen Effekten abhängt. Dieser Anteil verursacht im allgemeinen den großen Gierwinkelfehler, wenn ausschließlich der gemessene, rückgekoppelte Rollwinkel für den GierwinkelBeobachter verwendet wird.

Die Residuen $T_{DxR}$, $T_{DzR}$ können normalerweise vernachlässigt werden. Bei sehr großen Solarflügeln müssen in der Fehlerabschätzung auch höherfrequente Schwingungen berücksichtigt werden.

3.4.4.2.3.1 Einfluß des inertial-konstanten Anteils der Störmomente

Von den Störmomenten in den Gln. (72a, b) wird zunächst nur der Einfluß des inertial-konstanten Anteils untersucht, d.h.

$$T_{dx} = T_{DIx} = +A_I \cos \omega t \qquad (73a)$$

$$T_{dz} = T_{DIz} = - A_I \sin \omega t, \tag{73b}$$

woraus die Beziehung

$$T_{DIz} = \frac{1}{\omega_0} \cdot \dot{T}_{DIx} \tag{73c}$$

einfach herzuleiten ist.

Einsetzen der Gln. (28b, 46b, 54b) ineinander ergibt für den Gierwinkelfehler

$$\psi = \frac{1}{\omega_0} \cdot \tilde{x}_1 \cdot \frac{57.3}{|h_y|} \; [\text{deg} / \text{rad}] \tag{74a}$$

und der Schätzfehler $x_1$ berechnet sich nach Gl. (49b) mit $h_1 = 0$, $s \to 0$:

$$\tilde{x}_1 = (T_{DIz} - K_z \cdot h_z) + \frac{h_2}{\Omega_{N0}} (T_{DIx} - K_x \cdot h_x) \tag{74b}$$

Die Störeingänge in den Beobachter wurden dabei nullgesetzt, d.h.

$$\ddot{T}_{Dx} = 0 \tag{75a}$$

$$\ddot{T}_{Dz} = 0. \tag{75b}$$

In Gl. (74b) sind noch die Drallkomponenten $h_x$ und $h_z$ zu bestimmen. Diese werden mit Hilfe von Gl. (68) ohne Biaswinkel ($\phi_b = \theta_b = \psi_b = 0$) bei der Frequenz $\omega_0$ berechnet:

$$h_x(j\omega_0) = \frac{T_{DIx}}{K_x} \; ; \; h_z(j\omega_0) = \frac{T_{DIz}}{K_x} \tag{76a; 76b}$$

Einsetzen der Gln.(76a;b) in Gl. (74b) und dann in Gl. (74a) ergibt

$$\tilde{x}_1 = T_{DIz} - \frac{K_z}{K_x} \cdot T_{DIz} + \frac{h_z}{\Omega_N} \left( T_{DIx} - \frac{K_x \cdot T_{DIx}}{K_x} \right) \tag{77a}$$

$$\psi = T_{DIz} \left( 1 - \frac{K_z}{K_x} \right) \cdot \frac{57.3}{|h_y| \cdot \omega_0}. \tag{77b}$$

Für die Amplitude der Gierwinkelschwingung ergibt sich somit:

$$\hat{\psi} = A_I \left(1 - \frac{K_z}{K_x}\right) \cdot \frac{57.3}{|h_y| \cdot \omega_0} \tag{77c}$$

Man erkennt an Gl. (77c), daß der inertial-konstante Anteil $A_I$ keinen Einfluß auf die Amplitude des Gierwinkelfehlers hat, wenn für die Reglerparameter $K_x = K_z$ gewählt wird.

3.4.4.2.3.2 Einfluß des bahn-konstanten Anteils der Störmomente

Die bahn-konstanten Anteile $A_{0x}$ und $A_{0z}$ der Störmomente im Normalbetriebszustand in Gl. (72a,b) lassen sich mit zwei Verfahren schätzen, die im folgenden vorgestellt werden.

1. Verfahren

Zunächst werden von den Drallradkomponenten die Bias-Anteile abgezogen. Von Gl. (68) erhält man unter Vernachlässigung von Termen höherer Ordnung (z. B. $\omega_0 \theta_B$) und nach Subtraktion der in den Gln. (71a,b) angegebenen Bias-Anteile:

$$h_x^* = h_x - h_{xb} = \frac{-T_{Dx}^0 \cdot \frac{h_z}{\Omega_{N0}}}{\omega_0 - \frac{h_z}{\Omega_{N0}} \cdot K_x}, \tag{78a}$$

$$h_z^* = h_z - h_{xb} = \frac{-T_{Dx}^0 \cdot}{\omega_0 - \frac{h_z}{\Omega_{N0}} \cdot K_x}, \tag{78b}$$

wobei für die Störeingänge in den Beobachter und den Beobachterparameter $h_1$ gewählt wurde:

$$\ddot{T}_{Dx} = \ddot{T}_{Dz} = 0 \; ; \; h_1 = 0. \tag{78c}$$

Einsetzen der Gln. (69a,b) in die Gln. (78a,b) ergibt:

$$h_x^* = \frac{-T_{dx} - T_{ccx}}{\omega_0 - \frac{h_x}{\Omega_{N0}} \cdot K_x} \tag{79a}$$

$$h_z^* = \frac{-(T_{dz} + \hat{T}_{ccz}) \cdot \frac{h_2}{\Omega_{NO}}}{\omega_0 - \frac{h_z}{\Omega_{N0}} \cdot K_x} \tag{79b}$$

Weil nur der Einfluß des konstanten Teils $A_{0x}$ der Störung $T_{dx}$ in Gl. (72a) untersucht werden soll, werden die höherfrequenten Schwingungsanteile über einen Tag ausgemittelt, d.h. Schwingungsanteile mit der Frequenz $n \cdot \omega_0$ ($n = 1,2,3,..$) haben keinen Einfluß:

$$\bar{h}_x = \frac{1}{T_{per}} \int_0^{T_{per}} h_x^* dt \; ; \; T_{per} = \frac{1}{\omega_0} \cdot 2\pi \qquad (80a)$$

$$\bar{h}_z = \frac{1}{T_{per}} \int_0^{T_{per}} h_z^* dt \qquad (80b)$$

Das Ergebnis der Integration ist:

$$\bar{h}_z = \frac{-(A_{0x} - \hat{T}_{ccx})}{\left(\omega_0 - \dfrac{h2}{\Omega_{N0}} \cdot K_x\right)} \qquad (81a)$$

$$\bar{h}_x = \frac{-(A_{0x} - \hat{T}_{ccx})\dfrac{h2}{\Omega_{N0}}}{\left(\omega_0 - \dfrac{h2}{\Omega_{N0}} \cdot K_x\right)} \qquad (81b)$$

Der Schätzfehler $x_1$ berechnet sich nach Gl. (52b) mit $h_1 = 0$, $s \rightarrow 0$:

$$\tilde{x}_1 = T_{DOz}^0 - K_z \cdot \bar{h}_2 + \frac{h_z}{\Omega_{N0}}(T_{DOx}^0 - K_x \cdot \bar{h}_x) \qquad (82)$$

mit

$$T_{DOx}{}^0 = A_{0x} - T_{ccx} \qquad (83a)$$

$$T_{DOz}{}^0 = A_{0z} - T_{ccz}. \qquad (83b)$$

Ein einfaches Modell für den Zusammenhang zwischen $A_{0z}$ und $A_{0x}$ ist:

$$A_{0z} = CA_{0x}, \qquad (84)$$

wobei die Konstante C von der Konfiguration des Raumflugkörpers und der Jahreszeit abhängt.

Im folgenden wird ein Iterationsalgorithmus vorgestellt, mit dem die Kompensationsmomente $T_{ccx}$ und $T_{ccz}$ berechnet werden können:

$$\tilde{x}_1 = T_{DOzj}^0 + \frac{\left(K_z + \omega_0 \dfrac{h_z}{\Omega_{NO}}\right)}{\left(\omega_0 - \dfrac{h_z}{\Omega_{NO}} \cdot K_x\right)} \cdot T_{DOxj}^0 \tag{85a}$$

$$j = INT\left(\frac{1}{T_{per}} \cdot \int_0^t d\tau^0\right) \tag{85b}$$

$$j \le 0: \hat{T}_{ccj} = 0, \ \bar{h}_z(j) = 0 \tag{85c}$$

$$T_{DOx}(j) = -\bar{h}_z(j) \cdot \left(\omega_0 - \frac{h_z}{\Omega_{N0}} \cdot K_x\right) \tag{85d}$$

$$\ddot{T}_{ccx}(j) = f(j) \cdot T_{DOx}(j) + \ddot{T}_{ccx}(j-1) \tag{85e}$$

$$f(j) = k_0 + k_{ie}^{-j} \tag{85f}$$

$$\ddot{T}_{ccz}(j) = C \cdot \ddot{T}_{ccx}(j); \ 0 < K_0 + k_1 < 1 \tag{85g}$$

Die Auswirkungen von Unsicherheiten in den Parametern C und $A_{ox}$, $\Delta C$ und $\Delta A_{0x}$, auf den Gierwinkelfehler können drastisch vermindert werden. Aus Gl. (85b) ergibt sich ein GierwinkelSchätzfehler von

$$\Delta \tilde{x}_1 = \Delta A_{0z} + \Delta A_{0x} \cdot \left(\frac{K + \omega_0 \dfrac{h_z}{\Omega_{NO}}}{\omega_0 - K \dfrac{h_z}{\Omega_{NO}}}\right) \tag{86a}$$

$$\Delta\psi = \Delta\tilde{x}_1 \cdot \frac{57.3\deg}{|h_y| \cdot \omega_0}. \tag{86c}$$

$$\Delta A_{0z} = \Delta C \cdot A_{0x} + \Delta C \cdot A_{0x} \tag{86b}$$

Der Schätzfehler in Gl. (86a) kann durch Einsetzen der Gln. (28b, 46b, 54b) umgerechnet werden in den Gierwinkelfehler

Der Residuenanteil des z-Störmomentes in Gl. (72b), $T_{dzR}(\omega, t)$, kann im Gierbeobachter nicht geschätzt werden. Normalerweise ist er aber von geringer Bedeutung.

Der restliche Gierwinkelfehler berechnet sich somit zu:

$$\psi_R = \Delta\psi + T_{DzR} \cdot \frac{57.3\deg}{|h_y| \cdot \omega_0}. \tag{86d}$$

2. Verfahren

Ein weiteres Verfahren zur Schätzung und Kompensation bahn-konstanter Störmomentanteile basiert ebenfalls auf Gl. (68). Die Idee bei diesem Verfahren ist, die Kompensationsmomente als Beobachter-Störeingänge zu verwenden. Im Prinzip ist auch eine Kombination des ersten und des zweiten Verfahrens denkbar, bei dem die Störmomente zum Teil kompensiert werden und zum Teil Störmomente für den Beobachter berechnet werden.

Wie beim ersten Verfahren werden von den Drallradkomponenten die Bias-Anteile abgezogen. Von Gl. (68) erhält man unter Vernachlässigung von Termen höherer Ordnung (z. B. $\omega_0\theta_B$) und nach Subtraktion der in den Gln. (71a,b) angegebenen Bias-Anteile:

$$h_x^* = h_x - h_{xb} = \frac{-\frac{h_2}{\Omega_N}T_{Dx}^0 + \frac{h_2}{\Omega_N}\hat{T}_{Dx} + \hat{T}_{Dz}}{\omega_0 - \frac{h_x}{\Omega_{N0}} \cdot K_x}, \tag{87a}$$

$$h_z^* = h_z - h_{zb} = \frac{-T_{Dx}^0 + \frac{h_2}{\omega_0}\frac{K_x}{\Omega_N}\hat{T}_{Dx} + \frac{K_x}{\omega_0}\hat{T}_{Dx}}{\omega_0 - \frac{h_x}{\Omega_{N0}} \cdot K_x} \tag{87b}$$

mit den zu bestimmenden Störeingängen $\hat{T}_{Dx}$ und $\hat{T}_{Dz}$.

Wie beim ersten Verfahren werden statt $h_x^*$ und $h_z^*$ ihre über den Tag gemittelten Werte verwendet, siehe Gln. (81a,b). Mit den Schreibweisen

$$h_2/\Omega_N \quad =: a \tag{88a}$$

$$K_x/\omega_0 \quad =: K_x^* \tag{88b}$$

$$\omega_0 - h_2/\Omega_N K_x \quad =: K \tag{88c}$$

$$H_x^* \quad =: h_x K \tag{88d}$$

$$H_z^{*} \qquad =: h_z K \tag{88e}$$

ergibt sich fiir Gln. (87)

$$\bar{H}_x^{*} = - a T_{Dx}^0 + a \hat{T}_{Dx} + \hat{T}_{Dz} \tag{89a}$$

$$\bar{H}_z^{*} = - T_{Dx}^0 + K_x^{*}(a \hat{T}_{Dx} + \hat{T}_{Dz}) \tag{89b}$$

Aus Gl. (89b) folgt

$$T_{Dx}^0 = -\bar{H}_z^{*} + K_x^{*}(a \hat{T}_{Dx} + \hat{T}_{Dz}) \tag{89c}$$

Dieser Ausdruck wird verwendet, um solche Störeingänge für den Beobachter zu berechnen, daß der Gierschätzfehler möglichst klein wird.

Der Schätzfehler $x_1$ berechnet sich nach Gl. (52b) mit $h_1 = 0$, $s \to 0$:

$$\tilde{x}_1 \;=\; \frac{h2}{\Omega_N}\tilde{T}_{Dx} + \tilde{T}_{Dz} \tag{90}$$

Mit den Gln. (49f,g), (44b,c) (70a,b) und (69a,b) ergibt sich für Gl (90)

$$\tilde{x}_1 = \frac{h_2}{\Omega_N}\left( T_{Dx}^0 - \hat{T}_{Dx} - \frac{K_x}{K}\bar{H}_x^{*}\right) + \left( T_{Dz}^0 - \hat{T}_{Dz} - \frac{Kz}{K}\bar{H}_z^{*}\right) \tag{91}$$

Im ersten Klammerausdruck in Gl. (91) sind alle Terme bekannt oder meßbar, so daß eine sinnvolle Bedingung fiir die zu entwerfenden Beobachter-Störeingänge $T_{Dx}$ und $T_{Dz}$ ist, den Klammerausdruck nullzusetzen. Mit Gl. (89c) ergibt sich somit

$$-\bar{H}_x^{*}\frac{K_x}{K} - \hat{T}_{Dx} - \bar{H}_z^{*} + K_x^{*}\left(a\hat{T}_{Dx} + \hat{T}_{Dz}\right) = 0 \tag{92a}$$

In den zweiten Klammerausdruck von Gl. (91) geht in den Störterm $T_{Dz}=T_{dz}-T_{ccz}$ (Gl. 69b) die nicht beobachtbare Störgröße $T_{dz}$ ein, so daß sich keine Kombination aus $T_{Dx}$ und $T_{Dz}$ finden läßt, für die der rechte Klammerausdruck null ist. Daher wird als zweite Bedingung

$$\hat{T}_{Dz} = - \frac{H_z}{K}\bar{H}_z^{*} \tag{92b}$$

gewählt. Einsetzen von Gl. (92b) in Gl. (92a) führt auf den Beobachter-Störeingang in x-Richtung:

$$\hat{T}_{Dx} = \omega_0 \frac{-\bar{h}_x K_x - \bar{h}_z \left( \omega_0 + K_x \left( \dfrac{K_z}{\omega_0} - \dfrac{h_2}{\Omega_N} \right) \right)}{\omega_0 - \dfrac{h_2}{\Omega_N} K_x} \tag{92c}$$

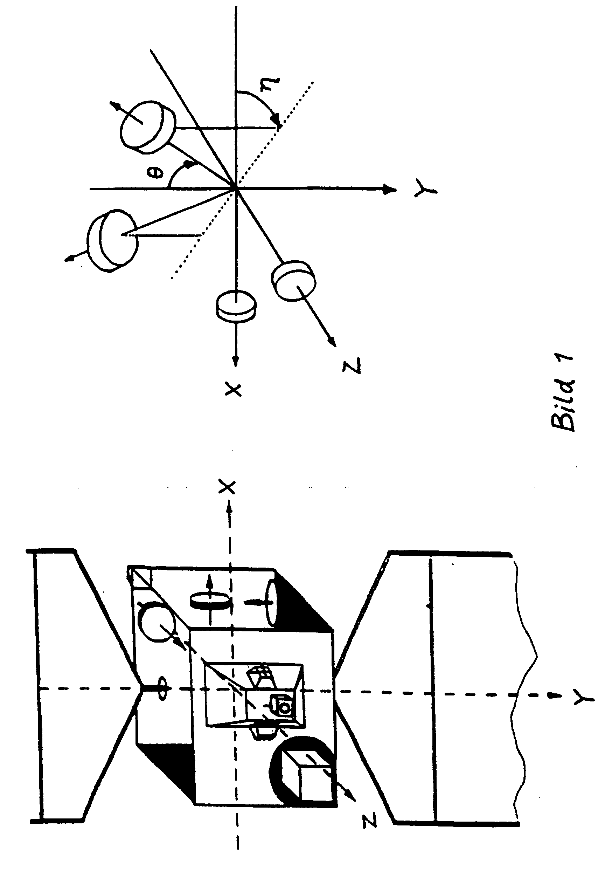

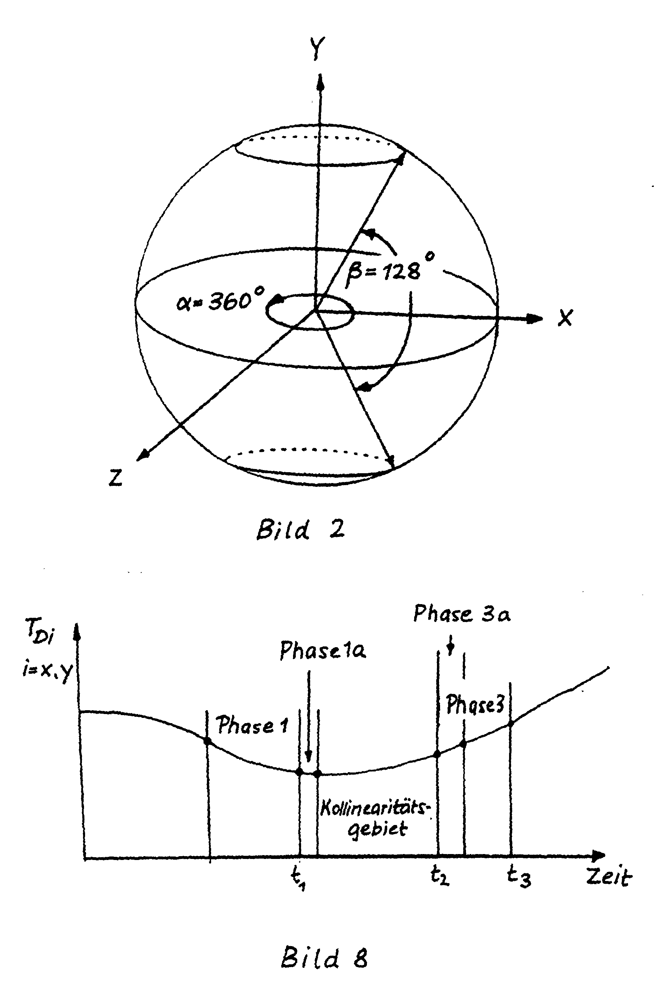

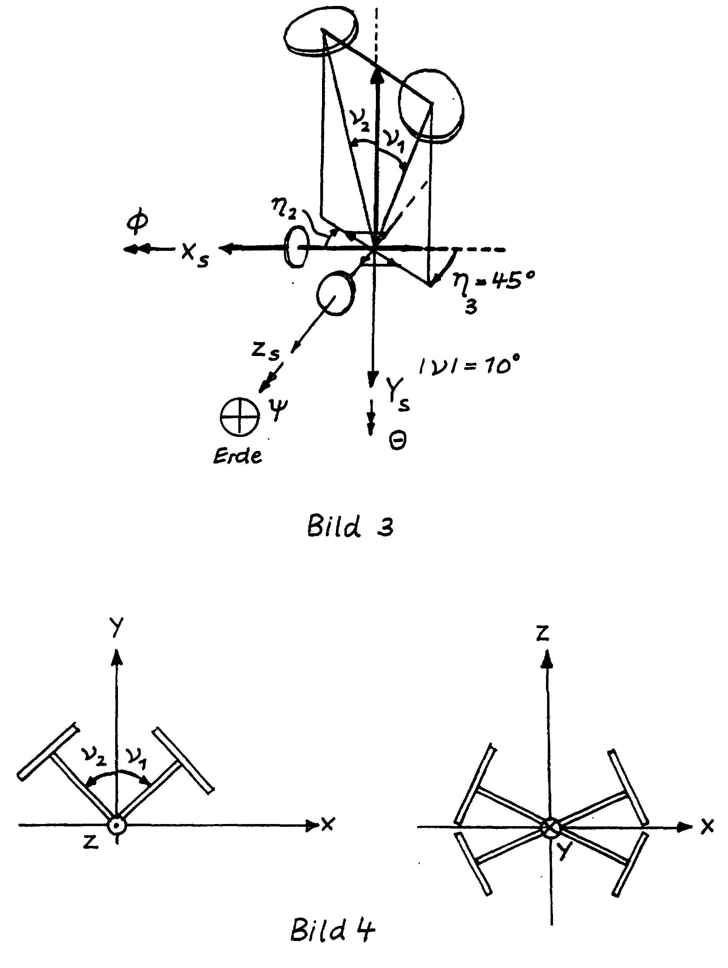

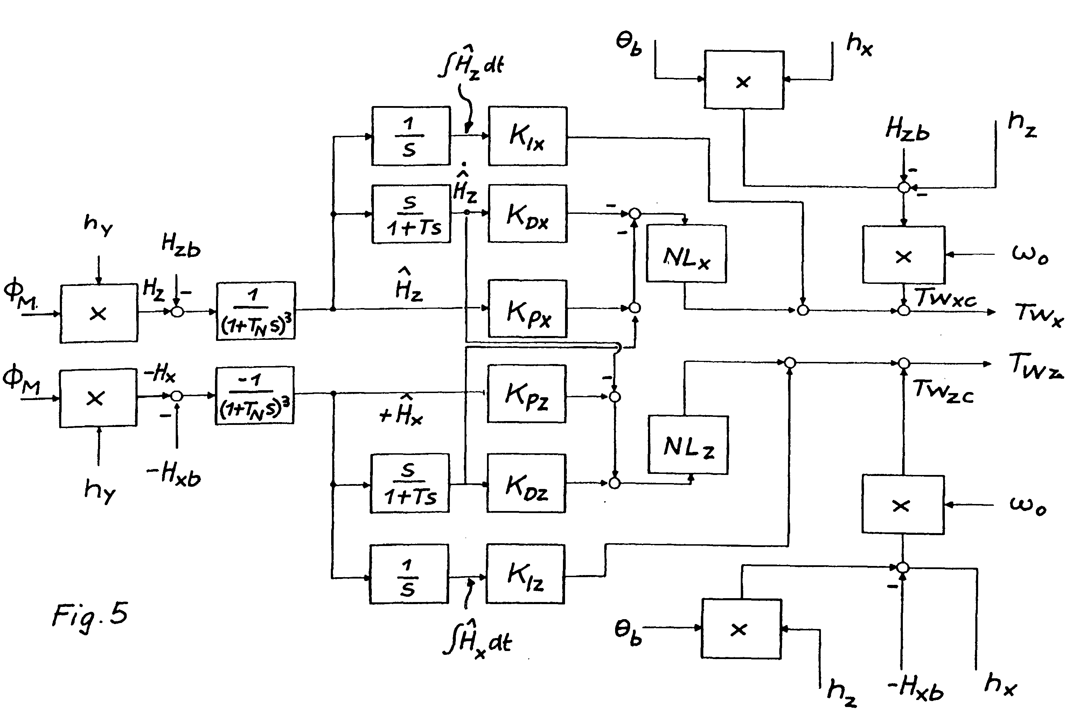

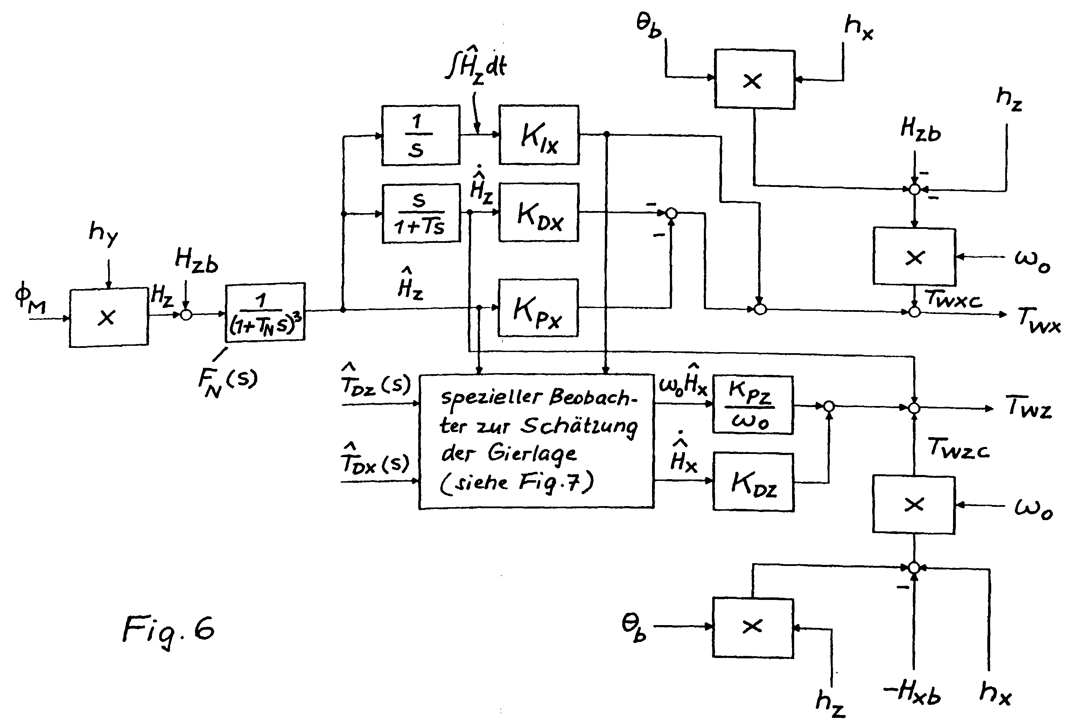

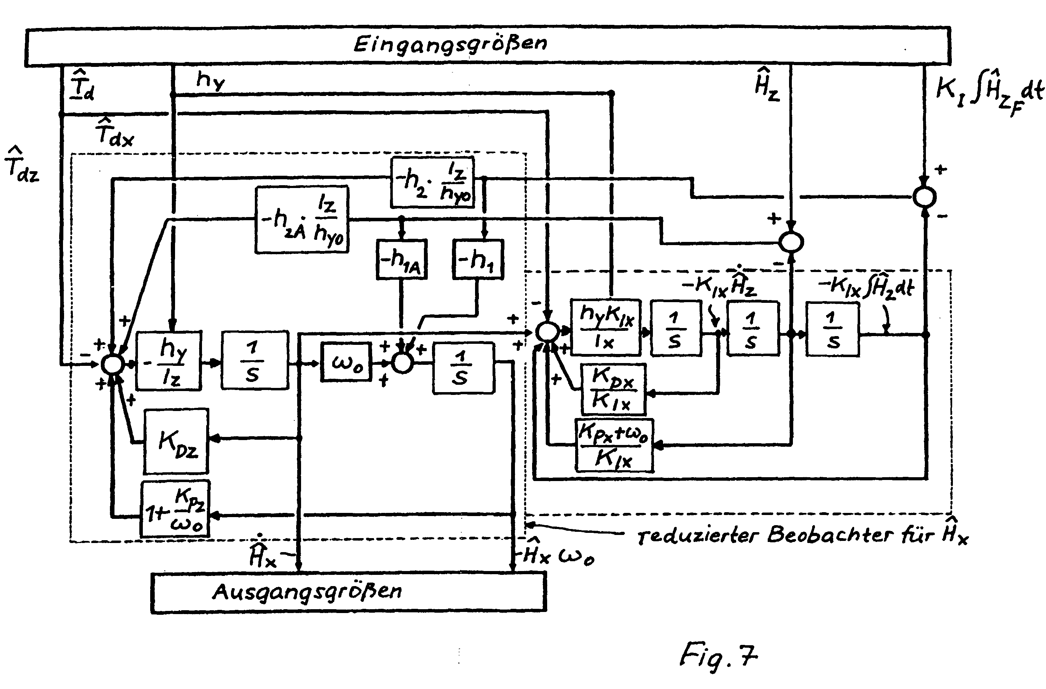

## Patentansprüche

1. Verfahren zur Lageregelung und Stabilisierung eines dreiachsenstabilisierten, drallbehafteten Raumfahrzeuges, welches mit einer Drallanordnung, die einem Drehimpulsvektor in Richtung der Nickachse ($y_s$) sowie Regelmomente um alle drei Achsen eines raumfahrzeugfesten Koordinatensystems (x, y, z) unabhängig voneinander zu erzeugen in der Lage ist, mit die Lageabweichungen um zwei als Rollachse und Gierachse senkrecht zueinander und senkrecht zu der bevorzugten Richtung orientierte Querachsen ($x_s$, $z_s$) messenden Lagesensoren und mit Aktuatoren zur Erzeugung äußerer Regelmomente ausgestattet ist, wobei die Drallanordnung mit Stellsignalen zur Erzeugung von Regelmomenten ($T_{wx}$, $T_{wz}$) um die beiden Querachsen ($x_s$, $z_s$) beaufschlagt wird und für Regelmomente $T_{wx}$, $T_{wz}$ gilt : $T_{wx} = -h_x$, $T_{wz} = -h_z$, **dadurch gekennzeichnet, dass** gleichzeitig mit Hilfe der Aktuatoren nach der Vorschrift

$$T_{cx} = -K_x h_x; \; T_{cz} = -K_z h_z$$

äußere Regelmomente proportional zu $h_x$, $h_z$ um die beiden Querachsen ($x_s$, $z_s$) erzeugt werden, wobei mit $h_x$ und $h_z$ die jeweiligen Komponenten des Drehimpulses h der Drallradaranordnung in Richtung der beiden Querachsen ($x_s$, $z_s$) bezeichnet sind und dass durch einen Regelalgorithmus eine aktive Nutationsentkoppelung bei gleichzeitiger Entkoppelung der Rollachse und Gierachse erfolgt.

## Claims

1. A process for attitude control and stabilization of a three-axes-stabilized spacecraft subject to spin, said spacecraft being equipped with a flywheel arrangement which is capable of generating, independently of one another, an angular-momentum vector in the direction of the pitch axis ($y_s$) as well as control moments about all three axes of a coordinate system (x, y, z) that is fixed with respect to the spacecraft, with attitude sensors measuring the attitudinal deviations about two transverse axes ($x_s$, $z_s$) oriented perpendicular to one another and perpendicular to the preferential direction as roll axis and yaw axis, and with actuators for generating external control moments, whereby the flywheel arrangement is acted upon by actuating signals for generating control moments ($T_{wx}$, $T_{wz}$) about the two transverse axes ($x_s$, $z_s$) and the following equations hold in respect of control moments $T_{wx}$, $T_{wz}$: $T_{wx} = -h_x$, $T_{wz} = -h_z$, **characterised in that** external control moments proportional to $h_x$, $h_z$ are generated simultaneously about the two transverse axes ($x_s$, $z_s$) with the aid of the actuators in accordance with the rule

$$T_{cx} = -K_x h_x; \; T_{cz} = -K_z h_z$$

wherein the respective components of the angular momentum h of the flywheel arrangement in the direction of the two transverse axes ($x_s$, $z_s$) are denoted by $h_x$ and $h_z$ and **in that** an active nutation decoupling with simultaneous decoupling of the roll axis and yaw axis is effected by means of a control algorithm.

## Revendications

1. Procédé de régulation d'attitude et de stabilisation d'un engin spatial stabilisé sur trois axes, soumis à une rotation propre, avec un dispositif de rotation qui est en mesure de générer un vecteur d'impulsions de rotation dans la direction de l'axe de tangage ($y_s$) ainsi que des couples de régulation autour des trois axes d'un système de coordonnées (x, y, z) liés à l'engin spatial et cela indépendamment les uns des autres, comprenant des capteurs de position qui mesurent les déviations de position autour de deux axes transversaux ($x_s$, $z_s$) perpendiculaires entre eux, l'axe de roulis et l'axe de lacet, et perpendiculaires à la direction préférentielle, et des actionneurs pour générer des couples de régulation extérieure, le dispositif de rotation recevant des signaux d'actionnement pour générer des couples de régulation ($T_{wx}$, $T_{wz}$) autour des deux axes transversaux ($x_s$, $z_s$), et les couples de régulation ($T_{wx}$, $T_{wz}$) étant liés par la relation suivante

$$T_{wx} = -\dot{h}_x, \quad T_{wz} = -\dot{h}_z,$$

**caractérisé en ce qu'**
en même temps à l'aide des actionneurs on génère selon la règle

$$T_{cz} = -K_x h_x \; ; \; T_{cz} = -K_z h_z$$

des couples de régulation extérieurs, proportionnels à hx, hz autour des deux axes transversaux ($x_s$, $z_s$), et hx et hz représentent les composants respectifs de l'impulsion de rotation h du dispositif de rotation en direction des deux axes transversaux ($x_s$, $z_s$), et à l'aide d'un algorithme de régulation on fait un découplage actif de nutation avec en même temps un découplage de l'axe de roulis et de l'axe de lacet.

EP 0 795 806 B1

Bild 1

37

Bild 2

Bild 8

Bild 3

Bild 4

Fig. 5

Fig. 6

Fig. 7

EP 0 795 806 B1